# EUROPEAN PATENT APPLICATION

(11) **EP 4 339 089 A1**
(43) Date of publication of application: **20.03.2024**
(21) Application number: 22807515.6
(22) Date of filing: 11.05.2022
(51) Int. Cl.: B62M 6/50, B60L 15/20, B62M 6/55

(54) **VEHICLE, NOTIFICATION METHOD, NOTIFICATION PROGRAM, STORAGE MEDIUM, AND NOTIFICATION DEVICE**

(30) Priority: 11.05.2021 JP 2021080616
(71) Applicant: HONDA MOTOR CO., LTD., Minato-ku Tokyo 107-8556 (JP)
(72) Inventor: NOMURA Naoki, Wako-shi, Saitama 351-0193 (JP); HATTORI Makoto, Wako-shi, Saitama 351-0193 (JP); ONUKI Hirotaka, Wako-shi, Saitama 351-0193 (JP); SUNAMOTO Masayuki, Wako-shi, Saitama 351-0193 (JP)
(74) Representative: Weickmann & Weickmann PartmbB
(86) International application number: PCT/JP2022/020000
(87) International publication number: WO 2022/239816

(57) **Abstract**

An electric bicycle (10), which is a vehicle including a crank pedal (79) which receives an input from a leg of a rider, a rear wheel (78) to which power input to the crank pedal (79) is transmitted, and a motor (M) which outputs power to be transmitted to the rear wheel (78), is switchable between an EAB driving state as a first driving state in which the rear wheel (78) is driven by at least the power input to the crank pedal (79), and an EV driving state as a second driving state in which the rear wheel (78) is driven by the power of the motor (M) alone.

## Description

### TECHNICAL FIELD

The present invention relates to a vehicle, a notification method, a notification program, a storage medium, and a notification device.

### BACKGROUND ART

In related art, an electric assist bicycle has been known which assists a stepping force of a crank pedal with power of a motor. Patent Literature 1 discloses an electric bicycle capable of selectively changing between self-traveling by a drive motor and assisted traveling in which a stepping force is assisted by a driving force of the drive motor.

### CITATION LIST

### PATENT LITERATURE

Patent Literature 1: JP2001-239982A

### SUMMARY OF INVENTION

### TECHNICAL PROBLEM

In a vehicle that can take a first driving state in which a wheel is driven by at least power input from a leg of a rider and a second driving state in which the wheel is driven by power of an electric motor alone, it is desired to travel in an appropriate driving state in accordance with the rider, the vehicle, or a state, a situation, or the like of a travel environment.

The present invention provides a vehicle capable of traveling in an appropriate driving state.

### SOLUTION TO PROBLEM

A first invention is a vehicle, including:
an input unit configured to receive an input of a force from a leg of a rider;
a wheel to which the force input to the input unit is transmitted; and
an electric motor configured to output power to be transmitted to the wheel or another wheel different from the wheel,
in which the vehicle is switchable between a first driving state in which the wheel is driven by at least the force input to the input unit, and a second driving state in which the wheel or the another wheel is driven by the power of the electric motor alone.

A second invention is a notification method for notifying of a driving state of a vehicle toward an outside of the vehicle, the vehicle including
an input unit configured to receive an input of a force from a leg of a rider,
a wheel to which the force input to the input unit is transmitted, and
an electric motor configured to output power to be transmitted to the wheel or another wheel different from the wheel,
the notification method including:
   a step of performing a notification of a first manner in a first driving state in which the wheel is driven by at least the force input to the input unit; and
   a step of performing, after switching from the first driving state to a second driving state in which the wheel or the another wheel is driven by the power of the electric motor alone, a notification of a second manner, which is different from the first manner, in the second driving state.

A third invention is a notification program for notifying of a driving state of a vehicle toward an outside of the vehicle, the vehicle including
an input unit configured to receive an input of a force from a leg of a rider,
a wheel to which the force input to the input unit is transmitted, and
an electric motor configured to output power to be transmitted to the wheel or another wheel different from the wheel,
the notification program causing to perform:
   a step of performing a notification of a first manner in a first driving state in which the wheel is driven by at least the force input to the input unit; and
   a step of performing, after switching from the first driving state to a second driving state in which the wheel or the another wheel is driven by the power of the electric motor alone, a notification of a second manner, which is different from the first manner, in the second driving state.

A fourth invention is a vehicle, including:
an electric motor configured to output power to be transmitted to a wheel,
in which the vehicle is switchable between a first traveling state in which the wheel is driven by the power of the electric motor with a first maximum speed as an upper limit, and a second traveling state in which the wheel is driven by the power of the electric motor with a second maximum speed, which is lower than the first maximum speed, as an upper limit,
the vehicle further includes a notification unit configured to notify of a traveling state of the vehicle toward an outside of the vehicle, and
the notification unit performs a notification of a first manner in the first traveling state, and performs a notification of a second manner, which is different from the first manner, in the second traveling state.

A fifth invention is a notification method for notifying of a traveling state of a vehicle toward an outside of the vehicle, the vehicle including an electric motor configured to output power to be transmitted to a wheel,
the notification method including:
a step of performing a notification of a first manner in a first traveling state in which the wheel is driven by the power of the electric motor with a first maximum speed as an upper limit; and
a step of performing, after switching from the first traveling state to a second traveling state in which the wheel is driven by the power of the electric motor with a second maximum speed, which is lower than the first maximum speed, as an upper limit, a notification of a second manner, which is different from the first manner, in the second traveling state.

A sixth invention is a notification program for notifying of a traveling state of a vehicle toward an outside of the vehicle, the vehicle including an electric motor configured to output power to be transmitted to a wheel,
the notification program causing to perform:
a step of performing a notification of a first manner in a first traveling state in which the wheel is driven by the power of the electric motor with a first maximum speed as an upper limit; and
a step of performing, after switching from the first traveling state to a second traveling state in which the wheel is driven by the power of the electric motor with a second maximum speed, which is lower than the first maximum speed, as an upper limit, a notification of a second manner, which different from the first manner, in the second traveling state.

A seventh invention is a notification device, which is mounted on a vehicle and notifies toward an outside of the vehicle, the vehicle having an acquisition unit configured to acquire a type of a travel path,
(i) in which the notification device performs:
   a notification of a first manner in a case where the acquisition unit acquires that the vehicle is traveling on a pedestrian lane on which a pedestrian passes: and
   a notification of a second manner, which is different from the first manner, in a case where the acquisition unit acquires that the vehicle is not traveling on the pedestrian lane or acquires that the vehicle is traveling on a travel path other than the pedestrian lane, or
(ii) the notification device performs:
   a notification of a third manner in a case where the acquisition unit acquires that the vehicle is traveling on a vehicle lane on which a vehicle travels; and
   a notification of a fourth manner, which is different from the third manner, in a case where the acquisition unit acquires that the vehicle is not traveling on the vehicle lane or acquires that the vehicle is traveling on a travel path other than the vehicle lane.

An eighth invention is a notification method for a notification device which is mounted on a vehicle and notifies toward an outside of the vehicle, the vehicle having an acquisition unit configured to acquire a type of a travel path,
(i) the notification method including:
   a step of performing a notification of a first manner in a case where the acquisition unit acquires that the vehicle is traveling on a pedestrian lane on which a pedestrian passes; and
   a step of performing a notification of a second manner, which is different from the first manner, in a case where the acquisition unit acquires that the vehicle is not traveling on the pedestrian lane or acquires that the vehicle is traveling on a travel path other than the pedestrian lane, or
(ii) the notification method including:
   a step of performing a notification of a third manner in a case where the acquisition unit acquires that the vehicle is traveling on a vehicle lane on which a vehicle travels; and
   a step of performing a notification of a fourth manner, which is different from the third manner, in a case where the acquisition unit acquires that the vehicle is not traveling on the vehicle lane or acquires that the vehicle is traveling on a travel path other than the vehicle lane.

A ninth invention is a notification program, for which a notification device is mounted on a vehicle and notifies toward an outside of the vehicle, the vehicle having an acquisition unit configured to acquire a type of a travel path,
(i) the notification program causing the notification device to perform:
   a step of performing a notification of a first manner in a case where the acquisition unit acquires that the vehicle is traveling on a pedestrian lane on which a pedestrian passes; and
   a step of performing a notification of a second manner, which is different from the first manner, in a case where the acquisition unit acquires that the vehicle is not traveling on the pedestrian lane or acquires that the vehicle is traveling on a travel path other than the pedestrian lane, or
(ii) the notification program causing the notification device to perform:
   a step of performing a notification of a third manner in a case where the acquisition unit acquires that the vehicle is traveling on a vehicle lane on which a vehicle travels; and
   a step of performing a notification of a fourth manner, which is different from the third manner, in a case where the acquisition unit acquires that the vehicle is not traveling on the vehicle lane or acquires that the vehicle is traveling on a travel path other than the vehicle lane.

A tenth invention is a storage medium readable by a computer, the storage medium storing the notification program according to any one of the third invention, the sixth invention, and the ninth invention.

### ADVANTAGEOUS EFFECTS OF INVENTION

According to the present invention, it is possible to provide a vehicle capable of traveling in an appropriate driving state.

### BRIEF DESCRIPTION OF DRAWINGS

FIG. 1 is a side view of an electric bicycle 10.
FIG. 2 is a schematic diagram of a power transmission mechanism including an electric assist unit 20.
FIG. 3 is a block diagram showing an example of a functional configuration of a control device 40.
FIG. 4 is a graph showing a relationship between an assist ratio and a vehicle speed in an assist traveling mode.
FIG. 5 is a graph showing a relationship between an upper limit torque of a motor M and a vehicle speed in an EV traveling mode.
FIG. 6 is a diagram showing an example of a traveling mode transition in the electric bicycle 10.
FIG. 7 is a flowchart showing an example of EV traveling mode switching control for entering the EV traveling mode.
FIG. 8 is a diagram showing a first example of temporal changes in a torque value Tq, a cadence, and a vehicle speed as the electric bicycle 10 travels.
FIG. 9 is a diagram showing a second example of the temporal changes in the torque value Tq, the cadence, and the vehicle speed as the electric bicycle 10 travels.
FIG. 10 is a flowchart showing an example of EV traveling mode switching control of a first modification.
FIG. 11 is a diagram showing an example of a traveling mode transition in the electric bicycle 10 of a second modification.
FIG. 12 is a diagram showing traveling modes switchable by the electric bicycle 10 of a third modification.
FIG. 13 is a diagram showing another example of notification manners of the electric bicycle 10 of the third modification.
FIG. 14 is a side view of an electric vehicle 10A of a fourth modification.
FIG. 15 is a diagram showing traveling modes switchable by the electric vehicle 10A of the fourth modification.
FIG. 16 is a side view of a stand-up type vehicle 10B of a fifth modification.
FIG. 17 is a diagram showing traveling modes switchable by the stand-up type vehicle 10B of the fifth modification.
FIG. 18 is a side view of a stand-up type vehicle 10C of a sixth modification.
FIG. 19 is a diagram showing traveling modes switchable by the stand-up type vehicle 10C of the sixth modification.
Fig. 20 is a diagram showing traveling modes switchable by the stand-up type vehicle 10C of a seventh modification.

### DESCRIPTION OF EMBODIMENTS

Hereinafter, an electric bicycle as an embodiment of a vehicle according to the present invention will be described with reference to the accompanying drawings. In the following description, the same or similar elements are denoted by the same or similar reference numerals, and the description thereof may be omitted or simplified as appropriate. The drawings are viewed in directions of reference numerals. In the present description and the like, in order to simplify and clarify the description, each of front, rear, left, right, up, and down directions is described according to a direction viewed from a driver who is a rider of the electric bicycle of the present embodiment.

### <Vehicle Structure>

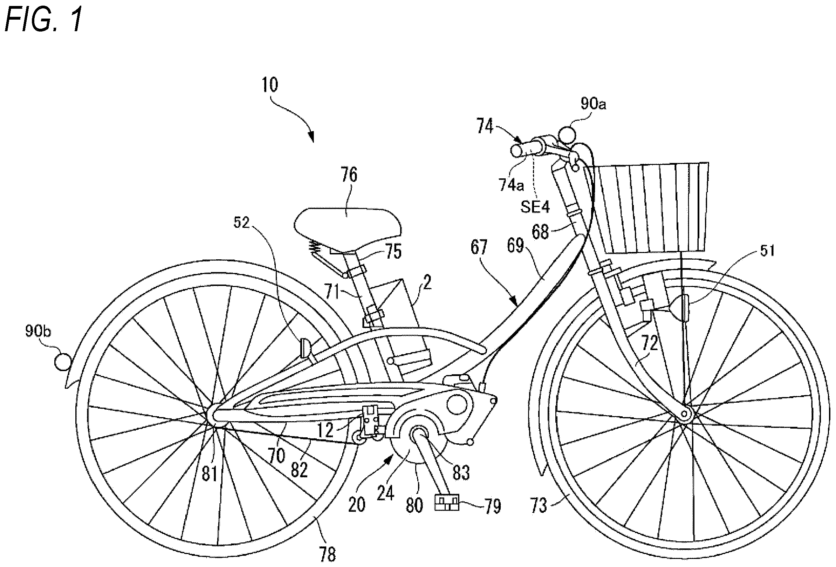

First, a vehicle structure of the electric bicycle of the present embodiment will be described. As shown in FIG. 1, an electric bicycle 10 of the present embodiment includes a front wheel 73, a rear wheel 78, a bicycle frame 67, a battery 2, and an electric assist unit 20 that generates power by electric power supplied from the battery 2.

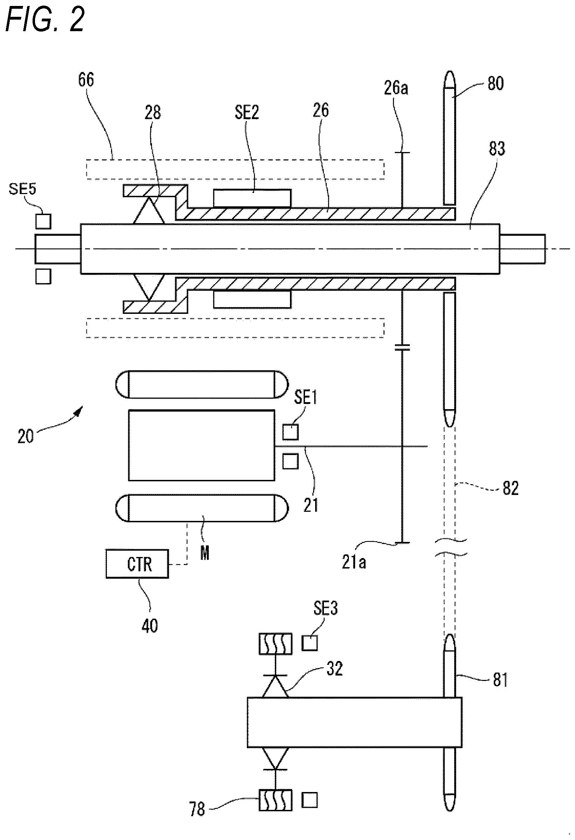

The bicycle frame 67 includes a head pipe 68 at a front end, a down pipe 69 going down toward a rear side from the head pipe 68 and extending from a front portion to a rear portion of a vehicle body, a support pipe 66 (see FIG. 2) fixed to a rear end of the down pipe 69 and extending in a left-right direction, a seat post 71 rising upward from the support pipe 66, and a pair of left and right rear forks 70 extending rearward from the support pipe 66.

Front forks 72 are supported by the head pipe 68 in a steerable manner, and the front wheel 73 is pivotally supported by lower ends of the front forks 72. A steering handlebar 74 is provided at an upper end of the front forks 72. Grip portions that can be gripped by a driver are provided at both left and right ends of the steering handlebar 74. In the left and right grip portions provided on the steering handlebar 74, the right grip portion is an accelerator grip 74a for receiving, from the driver, an operation corresponding to a request for driving a motor M (to be described later) provided in the electric assist unit 20. The front fork 72 is attached with a headlamp 51 that uses, for example, an incandescent lamp as a light source and illuminates the front in a traveling direction of the electric bicycle 10 at the time of traveling in a dark place such as at night. The headlamp 51 may be provided on a front side of the electric bicycle 10, and an attachment position thereof is not limited to the front fork 72, and may be, for example, the steering handlebar 74.

The rear wheel 78 as a drive wheel is pivotally supported between rear ends of the pair of left and right rear forks 70 extending rearward from the seat post 71. A rear reflecting member 52 is attached to a rear side of the bicycle frame 67 and above the rear fork 70. The rear reflecting member 52 reflects light emitted from the rear of the electric bicycle 10 toward the rear of the electric bicycle 10. A color of the light reflected by the rear reflecting member 52 is, for example, orange or red. The rear reflecting member 52 may be provided on the rear side of the electric bicycle 10, and an attachment position thereof is not limited to the bicycle frame 67, and may be, for example, the seat post 71 or a rear fender to be described later.

A support shaft 75 including a seat 76 at an upper end thereof is attached to the seat post 71 in a state where a position of the seat 76 in an up-down direction can be adjusted. The battery 2 that supplies the electric power to the electric assist unit 20 is detachably fixed to a front portion of the seat post 71 and below the seat 76.

A pair of crank pedals 79 for receiving an input of a force (a stepping force) from legs of the driver are coupled to a left end and a right end of a crankshaft 83 which coaxially penetrates the support pipe 66 of the bicycle frame 67. The stepping force applied to the crank pedal 79 is transmitted to the crankshaft 83 and input to an endless chain 82 via a drive sprocket 80. The chain 82 is wound around the drive sprocket 80 and a driven sprocket 81 provided on an axle of the rear wheel 78.

Referring also to FIG. 2, the electric assist unit 20 is provided around the support pipe 66 of the bicycle frame 67 such that the motor M and the crankshaft 83 are unitized.

In the electric assist unit 20, an output shaft 21 of the motor M and the crankshaft 83 are disposed in parallel inside a case 24. The crankshaft 83 is rotatably supported on an inner side of a cylindrical sleeve 26 via a first one-way clutch 28. At an outer peripheral side of the sleeve 26, a driven gear 26a meshing with a motor output gear 21a provided on the output shaft 21 of the motor M and the drive sprocket 80 are fixed. Therefore, a torque (also referred to as power) of the motor M is transmitted to the drive sprocket 80 via the motor output gear 21a, the driven gear 26a, and the sleeve 26.

A second one-way clutch 32 is provided between the driven sprocket 81 and the rear wheel 78.

In the electric bicycle 10 configured as described above, in a case where the crank pedal 79 is pedaled in an advancing direction (also referred to as a forward rotation direction), the first one-way clutch 28 is engaged, and forward rotation power of the crankshaft 83 is transmitted to the drive sprocket 80 via the sleeve 26 and is further transmitted to the driven sprocket 81 via the chain 82. At this time, since the second one-way clutch 32 is also engaged, the forward rotation power transmitted to the driven sprocket 81 is transmitted to the rear wheel 78.

On the other hand, in a case where the crank pedal 79 is pedaled in a reversing direction (also referred to as a reverse rotation direction), the first one-way clutch 28 is not engaged, reverse rotation power of the crankshaft 83 is not transmitted to the sleeve 26, and the crankshaft 83 idles.

Further, for example, in a case where the forward rotation power in the advancing direction (that is, the forward rotation direction) is input from the rear wheel 78 as in a case where the electric bicycle 10 is pushed in the advancing direction, the second one-way clutch 32 is not engaged and the forward rotation power of the rear wheel 78 is not transmitted to the driven sprocket 81. Therefore, the rear wheel 78 rotates relative to the driven sprocket 81.

On the other hand, in a case where the reverse rotation power in the reversing direction (that is, the reverse rotation direction) is input from the rear wheel 78 as in a case where the electric bicycle 10 is pushed in the reversing direction, the second one-way clutch 32 is engaged, and the reverse rotation power of the rear wheel 78 is transmitted to the driven sprocket 81, and is further transmitted to the drive sprocket 80 via the chain 82. At this time, since the first one-way clutch 28 is also engaged, the reverse rotation power transmitted to the drive sprocket 80 is transmitted to the crankshaft 83 and the crank pedal 79, and the crankshaft 83 and the crank pedal 79 are reversely rotated.

As described above, in the electric bicycle 10, a torque in the forward rotation direction output from the motor M is transmitted to the rear wheel 78 via the motor output gear 21a, the driven gear 26a, the sleeve 26, the drive sprocket 80, the chain 82, the driven sprocket 81, and the second one-way clutch 32, and is used for driving of the rear wheel 78 (that is, traveling of the electric bicycle 10).

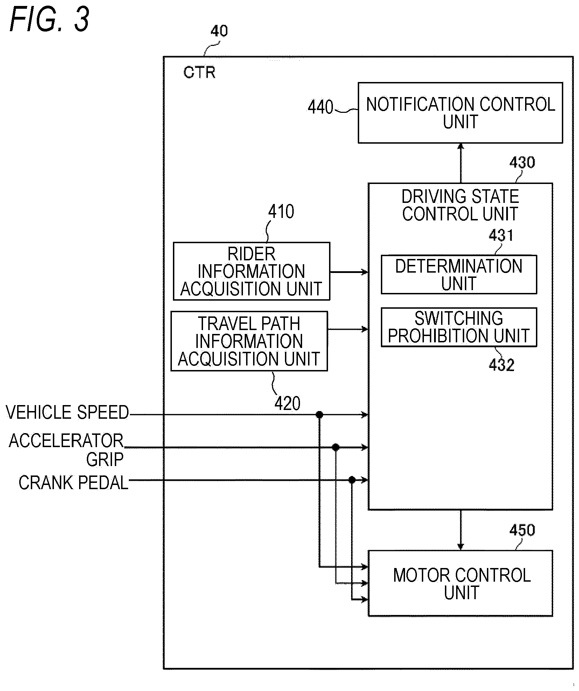

The electric bicycle 10 is switchable between an electric-assisted bicycle (EAB) traveling mode for traveling in an EAB driving state in which the rear wheel 78 is driven by at least the force (that is, the stepping force) input to the crank pedal 79, and an electric vehicle (EV) traveling mode for traveling in an EV driving state in which the rear wheel 78 is driven by the power of the motor M alone. The switching of the traveling modes (that is, the driving states) of the electric bicycle 10 is controlled by, for example, a control device (illustrated as a CTR) 40 of the electric assist unit 20. The control device 40 will be described later with reference to FIG. 3 and the like.

The electric bicycle 10 is provided with various sensors for acquiring various information necessary for controlling the electric bicycle 10. For example, the electric assist unit 20 is provided with a motor rotation speed sensor SE1 that acquires (for example, detects) a rotation speed of the motor M. The sleeve 26 is provided with a torque sensor SE2 that acquires a torque value Tq generated by a force (a stepping force) with which the driver steps on the crank pedal 79. The rear wheel 78 is provided with a rear wheel rotation speed sensor SE3 that acquires a rotation speed of the rear wheel 78. Further, the accelerator grip 74a is provided with an accelerator opening degree sensor SE4 (see FIG. 1) that acquires an operation amount (also referred to as an accelerator opening degree) for the accelerator grip 74a.

The electric bicycle 10 is also provided with a cadence sensor SE5 that acquires a cadence, which is a rotation speed of the crank pedal 79. The cadence sensor SE5 acquires an integer greater than 0 (that is, a natural number) as the cadence, for example, when the crank pedal 79 rotates 90 degrees or more. In other words, for example, even if the crank pedal 79 is rotated to some extent by the driver lightly touching the crank pedal 79 or the like, if an amount of rotation is less than 90 degrees, the cadence acquired by the cadence sensor SE5 is 0.

Output values of the various sensors including the motor rotation speed sensor SE1, the torque sensor SE2, the rear wheel rotation speed sensor SE3, the accelerator opening degree sensor SE4, and the cadence sensor SE5 are sent to the control device 40.

Further, the electric bicycle 10 is provided with a front notification lamp 90a perceivable from the front side and lateral side with respect to the electric bicycle 10 and a rear notification lamp 90b perceivable from the rear side and the lateral side with respect to the electric bicycle 10, as a notification unit that notifies that the electric bicycle 10 is in any one traveling mode (in other words, any one driving state) toward an outside of the electric bicycle 10. Here, the perceivable means, for example, being recognizable visually or audibly.

Here, the front notification lamp 90a and the rear notification lamp 90b are light emitting units that are visible (that is, visually recognizable) from the outside of the electric bicycle 10. Accordingly, it is possible to perform a visually recognizable notification to a traffic participant around the electric bicycle 10. That is, the traffic participant can visually recognize the traveling mode (the driving state) of the electric automobile 10 that is difficult to be determined only by observing a state of traveling or the like.

For example, in the present embodiment, each of the front notification lamp 90a and the rear notification lamp 90b includes a light-emitting diode (LED) as a light source, and is configured to emit light in an emission light color of yellow. The LED as the light source of the front notification lamp 90a may be disposed in the vicinity of the incandescent lamp as the light source of the headlamp 51, and the front notification lamp 90a may be configured integrally with the headlamp 51. The emission light color of the front notification lamp 90a and the rear notification lamp 90b may be a color other than yellow, and the light sources of the front notification lamp 90a and the rear notification lamp 90b may be light emitters other than the LED, such as the incandescent lamp.

In the present embodiment, the front notification lamp 90a is provided on the front side (the steering handlebar 74 in an example shown in FIG. 1) of the electric bicycle 10, and is visible from the front side and the lateral side with respect to the electric bicycle 10. The rear notification lamp 90b is provided on the rear side (the rear fender located above the rear wheel 78 in the example shown in FIG. 1) of the electric bicycle 10 with respect to the front notification lamp 90a, and is visible from the rear side and lateral side with respect to the electric bicycle 10. The front notification lamp 90a may be visible at least from the front side with respect to the electric bicycle 10, and the rear notification lamp 90b may be visible at least from the rear side with respect to the electric bicycle 10.

Although the details will be described later, the front notification lamp 90a and the rear notification lamp 90b are turned on or off to notify the traffic participant (including various vehicles such as a bicycle, a motorcycle, and an automobile in addition to a pedestrian) around the electric bicycle 10 of the traveling mode (in other words, the driving state) of the electric bicycle 10.

FIG. 1 shows the example in which the front notification lamp 90a is provided on the steering handlebar 74 and the rear notification lamp 90b is provided on the rear fender located above the rear wheel 78, but the arrangement positions are not limited thereto. In addition, any one of the front notification lamp 90a and the rear notification lamp 90b may be provided alone.

In the present embodiment, in a case where the electric bicycle 10 travels in the EAB traveling mode, the driver pedals the crank pedals 79 perceivable from the front side, the rear side, and the lateral side with respect to the electric bicycle 10 for traveling. On the other hand, in a case where the electric bicycle 10 travels in the EV traveling mode, the driver operates the accelerator grip 74a for traveling, without pedaling the crank pedals 79.

In the present embodiment, in order to simplify the description, a gear ratio between the motor output gear 21a and the driven gear 26a is set to 1, and the rotation speed of the motor M and a rotation speed of the sleeve 26 are normally equal to each other. Therefore, the output value of the motor rotation speed sensor SE1 can be regarded as the rotation speed of the sleeve 26.

### <Control Device>

Next, the control device 40 will be described with reference to FIG. 3. For example, the control device 40 includes a processor (not shown) capable of executing various calculations, a random access memory (RAM) used as a work area of the processor, and a storage medium such as a read only memory (ROM) that stores various information. As shown in FIG. 3, the control device 40 includes a rider information acquisition unit 410, a travel path information acquisition unit 420, a driving state control unit 430, a notification control unit 440, and a motor control unit 450 as functional blocks implemented by the processor executing the program stored in the storage medium such as the ROM.

The rider information acquisition unit 410 acquires information related to a rider of the electric bicycle 10 (hereinafter, also referred to as rider information). The rider information includes, for example, age information related to an age of a driver. The age information is, for example, information indicating an age (for example, 20 years old) of a driver. The age information may be information indicating whether an age of a driver is equal to or greater than a predetermined age. Here, the predetermined age may be an age (for example, 16 years old) at which the electric bicycle 10 can be caused to travel in the EV traveling mode (that is, the EV driving state), and may also be said to be a socially acceptable age for causing the electric bicycle 10 to travel in the EV traveling mode.

The rider information may include license information related to a possession state of a driving license (also simply referred to as a license) of a driver. The license information is, for example, information indicating whether a driver has a license for driving the electric bicycle 10 to travel in the EV traveling mode.

The rider information acquisition unit 410 can acquire the rider information by communicating with, for example, a terminal device (for example, a smartphone carried by a driver) or a server device that stores the rider information. The rider information acquisition unit 410 may acquire the rider information by reading the rider information from a storage medium (for example, an IC chip) included in a driving license, a personal number card, a health insurance card, or the like. Further, the rider information acquisition unit 410 may acquire the rider information input by a driver via an input device (for example, a touch panel or a keyboard) that can be operated by the driver. The rider information acquisition unit 410 may acquire the age information by performing image recognition on a face image of a driver captured by a camera or the like included in the electric bicycle 10, the above terminal device, or the like.

The travel path information acquisition unit 420 acquires information (hereinafter, also referred to as travel path information) related to a type of a path (hereinafter, also referred to as a travel path) on which the electric bicycle 10 travels. Examples of the type of the travel path include a pedestrian passage (hereinafter, also referred to as a pedestrian lane) on which a pedestrian passes and a vehicle passage (hereinafter, also referred to as a vehicle lane) on which a vehicle passes. Here, the pedestrian lane is, for example, a sidewalk or a side strip on which a pedestrian is allowed to pass according to Japanese regulations. In addition, the vehicle lane is, for example, a roadway, a bicycle lane, or a bicycle-exclusive traffic lane on which a vehicle is allowed to pass according to Japanese regulations. The travel path information is, for example, information indicating whether a type of a travel path on which the electric bicycle 10 travels is the pedestrian lane or the vehicle lane.

The travel path information acquisition unit 420 can acquire the travel path information by communicating with, for example, a terminal device (for example, a smartphone carried by a driver) or a server device that stores map information including information indicating a type of each road. A global navigation satellite system (GNSS) receiver capable of acquiring a current position of the electric bicycle 10 based on a signal received from a positioning satellite may be provided on the electric bicycle 10, and the travel path information acquisition unit 420 may acquire the travel path information based on the current position of the electric bicycle 10 acquired by the GNSS receiver and the map information referable by the travel path information acquisition unit 420. Further, by transmitting information indicating the current position of the electric bicycle 10 acquired by the above GNSS receiver to the terminal device (for example, the smartphone carried by the driver) or the server device that stores the map information, the travel path information acquisition unit 420 may acquire the travel path information from the terminal device or the server device. The travel path information acquisition unit 420 may acquire the travel path information by performing image recognition on a landscape image including a travel path of the electric bicycle 10 captured by a camera or the like included in the electric bicycle 10, the above terminal device, or the like. Further, the travel path information acquisition unit 420 may acquire the travel path information based on information transmitted by near-field wireless communication from an external device installed on a road and storing a type of the road. The travel path information acquisition unit 420 may acquire the travel path information based on a type of a travel path input by a rider (for example, a driver) of the electric bicycle 10.

The driving state control unit 430 controls the traveling mode (in other words, the driving state) of the electric bicycle 10 based on a vehicle speed that is a travel speed of the electric bicycle 10, an operation on the accelerator grip 74a (that is, the operation corresponding to the request for driving the motor M), and an operation on the crank pedal 79 (that is, an input of a force to the crank pedal 79).

For example, when the accelerator grip 74a is operated while the vehicle speed is equal to or lower than a predetermined speed (for example, 15 [km/h] in the present embodiment), the driving state control unit 430 takes the electric bicycle 10 into the EV traveling mode. When the crank pedal 79 is operated in the EV traveling mode, the driving state control unit 430 takes the electric bicycle 10 into the EAB traveling mode. Further, when the vehicle speed exceeds the above predetermined speed, the driving state control unit 430 takes the electric bicycle 10 into the EAB traveling mode regardless of an operation of a driver.

The vehicle speed can be derived based on, for example, the output value of the rear wheel rotation speed sensor SE3. The operation on the accelerator grip 74a can be detected based on the output value of the accelerator opening degree sensor SE4. The operation on the crank pedal 79 can be detected based on the output value of the torque sensor SE2 or the cadence sensor SE5.

The driving state control unit 430 includes a determination unit 431 and a switching prohibition unit 432, and is configured to prohibit switching to the EV traveling mode, based on the rider information acquired by the rider information acquisition unit 410 and the travel path information acquired by the travel path information acquisition unit 420.

For example, the determination unit 431 determines whether an age of a driver represented by the age information included in the rider information acquired by the rider information acquisition unit 410 is equal to or greater than the predetermined age. In a case where the determination unit 431 determines that an age of a rider is not equal to or greater than the predetermined age (that is, the age of the rider is less than the predetermined age), the switching prohibition unit 432 prohibits the switching to the EV traveling mode.

The determination unit 431 may determine whether a driver has a license for driving the electric bicycle 10 to travel in the EV traveling mode, based on the license information included in the rider information acquired by the rider information acquisition unit 410. In a case where the determination unit 431 determines that the driver does not have the license for driving the electric bicycle 10 to travel in the EV traveling mode, the switching prohibition unit 432 may prohibit the switching to the EV traveling mode.

Further, the determination unit 431 may determine whether a type of a travel path on which the electric bicycle 10 travels is the pedestrian lane, based on the travel path information acquired by the travel path information acquisition unit 420. In a case where the determination unit 431 determines that the type of the travel path on which the electric bicycle 10 travels is the pedestrian lane, the switching prohibition unit 432 may prohibit the switching to the EV traveling mode.

The notification control unit 440 controls the notification unit such as the front notification lamp 90a and the rear notification lamp 90b to notify of the traveling mode (that is, the driving state) of the electric bicycle 10 toward the outside (for example, the traffic participant present around the electric bicycle 10). For example, in a state where the electric bicycle 10 is in the EAB traveling mode (in other words, when the electric bicycle 10 is in the EAB driving state), the notification control unit 440 turns off the front notification lamp 90a and the rear notification lamp 90b as a notification of a first manner. On the other hand, in a state where the electric bicycle 10 is in the EV traveling mode (in other words, when the electric bicycle 10 is in the EV driving state), the notification control unit 440 turns on the front notification lamp 90a and the rear notification lamp 90b as a notification of a second manner.

In the present embodiment, the notification of the first manner in the EAB traveling mode is performed by turning off the front notification lamp 90a and the rear notification lamp 90b, and the notification of the second manner in the EV traveling mode is performed by turning on the front notification lamp 90a and the rear notification lamp 90b (more specifically, turning on in an emission light color of yellow), but the present invention is not limited thereto.

For example, in a case where the front notification lamp 90a and the rear notification lamp 90b are each provided as a light emitting unit whose emission light color can be changed, the notification control unit 440 may notify toward the outside of the traveling mode of the electric bicycle 10, by using the emission light colors of the front notification lamp 90a and the rear notification lamp 90b. For example, the notification control unit 440 may turn on the front notification lamp 90a and the rear notification lamp 90b in light blue as the notification of the first manner in the EAB traveling mode, and turn on the front notification lamp 90a and the rear notification lamp 90b in yellow as the notification of the second manner in the EV traveling mode.

In a case where the front notification lamp 90a and the rear notification lamp 90b are each provided as a light emitting unit whose emission light intensity (in other words, luminance) can be changed, the notification control unit 440 may notify toward the outside of the traveling mode of the electric bicycle 10, by using the emission light intensities of the front notification lamp 90a and the rear notification lamp 90b. For example, the notification control unit 440 may turn on the front notification lamp 90a and the rear notification lamp 90b with yellow and a low intensity (in other words, low luminance) as the notification of the first manner in the EAB traveling mode, and turn on the front notification lamp 90a and the rear notification lamp 90b with yellow and a medium intensity (in other words, medium luminance) higher than the low intensity as the notification of the second manner in the EV traveling mode.

In a case where the front notification lamp 90a and the rear notification lamp 90b are each provided as a light emitting unit whose blinking interval can be changed, the notification control unit 440 may notify toward the outside of the traveling mode of the electric bicycle 10, by using the blinking intervals of the front notification lamp 90a and the rear notification lamp 90b. For example, the notification control unit 440 may cause the front notification lamp 90a and the rear notification lamp 90b to blink in yellow and at a long interval cycle as the notification of the first manner in the EAB traveling mode, and cause the front notification lamp 90a and the rear notification lamp 90b to blink in yellow and at a short interval cycle shorter than the long interval cycle as the notification of the second manner in the EV traveling mode.

The front notification lamp 90a and the rear notification lamp 90b do not have to be 0 in light emission light intensity (that is, completely turned off) at a moment when the light emission light intensity is the lowest during blinking. In a case where the front notification lamp 90a and the rear notification lamp 90b are each provided as a light emitting unit capable of flickering with an interval of turning on and off longer than that of blinking, the notification control unit 440 may notify toward the outside of the traveling mode of the electric bicycle 10, by using flickering intervals of the front notification lamp 90a and the rear notification lamp 90b.

The notification control unit 440 may notify of the traveling mode (that is, the driving state) of the electric bicycle 10 by a combination of two or more of the emission light color, the emission light intensity, and the blinking interval (or the flickering interval) described above, toward the outside. For example, in a case where the front notification lamp 90a and the rear notification lamp 90b are each provided as a light emitting unit whose emission light color and blinking interval can be changed, the notification control unit 440 may cause the front notification lamp 90a and the rear notification lamp 90b to blink in light blue and at a long interval cycle as the notification of the first manner in the EAB traveling mode, and cause the front notification lamp 90a and the rear notification lamp 90b to blink in yellow and at a short interval cycle as the notification of the second manner in the EV traveling mode.

The motor control unit 450 controls the motor M based on the vehicle speed, the operation on the accelerator grip 74a, and the operation on the crank pedal 79. The motor control unit 450 changes a control mode of the motor M based on the traveling mode (that is, the driving state) of the electric bicycle 10.

For example, in the EAB traveling mode, the motor control unit 450 controls the motor M based on an amount of a force input to the crank pedal 79. Specifically, in the EAB traveling mode, the motor control unit 450 calculates, based on the torque value Tq which is the output value of the torque sensor SE2, a force (a stepping force) with which a driver steps on the crank pedal 79, and controls the motor M such that an assist force determined by the calculated stepping force and an assist ratio corresponding to the vehicle speed is generated.

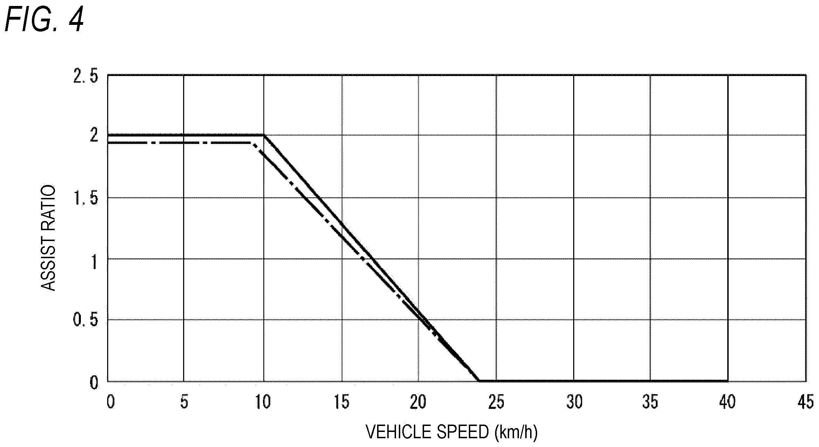

According to Japanese regulations, as an upper limit value of the assist ratio with respect to the vehicle speed, as indicated by a solid line in FIG. 4, the upper limit value of the assist ratio is required to be 2 until the vehicle speed reaches 10 [km/h], and the assist ratio is required to be gradually decreased from 2 to 0 when the vehicle speed changes from 10 [km/h] to 24 [km/h].

In the present embodiment, an assist ratio indicated by a one-dot chain line in FIG. 4 is set in advance in the control device 40 so as not to exceed the assist ratio set as the upper limit value according to Japanese regulations. Therefore, in the EAB traveling mode, the motor control unit 450 controls the motor M such that the assist force corresponding to the stepping force and the assist ratio indicated by the one-dot chain line in FIG. 4 is generated. Such an EAB traveling mode can also be referred to as a high-speed electric traveling mode in which the rear wheel 78 is driven by the power of the motor M with a maximum speed of 24 [km/h] as an upper limit. In the EAB traveling mode, the motor control unit 450 prohibits the motor M from driving based on the operation on the accelerator grip 74a.

On the other hand, in the EV traveling mode, the motor control unit 450 controls the motor M such that power corresponding to the accelerator opening degree (that is, the operation amount for the accelerator grip 74a) is generated.

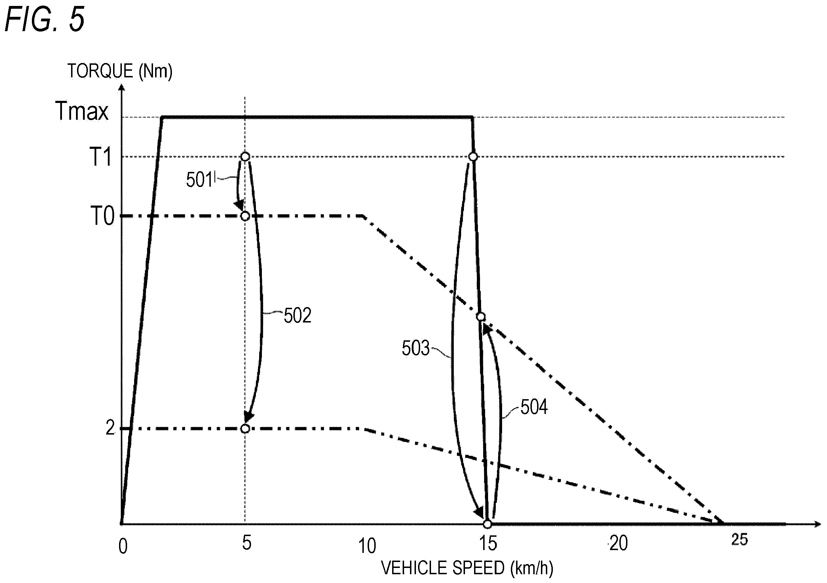

In the present embodiment, as shown in FIG. 5, an upper limit torque that is an upper limit of the power (hereinafter, also simply referred to as the upper limit torque) that can be generated by the motor M in the EV traveling mode which can be set when the vehicle speed is equal to or lower than 15 [km/h] is defined as Tmax (where Tmax > 0) [Nm]. Therefore, in the EV traveling mode, the motor control unit 450 controls the motor M such that the power corresponding to the accelerator opening degree is generated in a range equal to or less than the upper limit torque (that is, Tmax [Nm]). Such an EV traveling mode can also be referred to as an electric traveling mode (a medium-speed electric traveling mode) in which the rear wheel 78 is driven by the power of the motor M with a maximum speed of 15 [km/h] as an upper limit. The upper limit torque may be a maximum output of the motor M or a rated output. An upper limit value of the control of the motor M may be set as the upper limit torque. Further, the upper limit torque may be a value that varies according to the vehicle speed.

Here, a specific control example for the motor M performed by the motor control unit 450 when the traveling mode (that is, the driving state) of the electric bicycle 10 is switched will be described.

T1 (where T1 ≤ Tmax) [Nm] in FIG. 5 is an example of the torque that the motor control unit 450 causes the motor M to output in a case where the accelerator opening degree is a predetermined value greater than 0 in the EV traveling mode. A one-dot chain line in FIG. 5 is an example of the torque (the assist force) that the motor control unit 450 causes the motor M to output in a case where the stepping force is 5 [Nm] in the EAB traveling mode. A two-dot chain line in FIG. 5 is an example of the torque (the assist force) that the motor control unit 450 causes the motor M to output in a case where the stepping force is 1 [Nm] in the EAB traveling mode.

For example, in the EV traveling mode, it is assumed that when the vehicle speed is 5 [km/h], and the motor M is caused to output T1 [Nm] corresponding to the accelerator opening degree, the crank pedal 79 is operated, and the stepping force at that time is 5 [Nm]. In such a case, the driving state control unit 430 switches the driving state of the electric bicycle 10 from the EV traveling mode to the EAB traveling mode in accordance with the operation on the crank pedal 79. The motor control unit 450 prohibits the motor M from driving according to the accelerator opening degree, in accordance with the switching to the EAB traveling mode performed by the driving state control unit 430. As indicated by an arrow 501 in FIG. 5, the motor control unit 450 changes the output of the motor M from T1 [Nm] corresponding to the accelerator opening degree to 10 [Nm] corresponding to the stepping force of the crank pedal 79.

In the EV traveling mode, it is assumed that when the vehicle speed is 5 [km/h], and the motor M is caused to output T1 [Nm] corresponding to the accelerator opening degree, the crank pedal 79 is operated, and the stepping force at that time is 1 [Nm]. Also in such a case, the driving state control unit 430 switches the driving state of the electric bicycle 10 from the EV traveling mode to the EAB traveling mode in accordance with the operation on the crank pedal 79. As indicated by an arrow 502 in FIG. 5, the motor control unit 450 changes the output of the motor M from T1 [Nm] corresponding to the accelerator opening degree to 2 [Nm] corresponding to the stepping force of the crank pedal 79, in accordance with the switching to the EAB traveling mode.

In the EV traveling mode, it is assumed that the vehicle speed becomes 15 [km/h] when the motor M is caused to output T1 [Nm] corresponding to the accelerator opening degree. In such a case, the driving state control unit 430 switches the driving state of the electric bicycle 10 from the EV traveling mode to the EAB traveling mode even though there is no operation on the crank pedal 79. If there is no operation on the crank pedal 79 when the vehicle speed becomes 15 [km/h], the motor control unit 450 changes the output of the motor M from T1 [Nm] corresponding to the accelerator opening degree to 0 [Nm] as indicated by an arrow 503 in FIG. 5. Thereafter, if the crank pedal 79 is operated and the stepping force is 5 [Nm], the motor control unit 450 controls the motor M such that the assist force corresponding to the stepping force (here, 5 [Nm]) and the vehicle speed (here, 15 [km/h]) is generated as indicated by an arrow 504 in FIG. 5.

By the way, if the output of the motor M is suddenly changed to 0 [Nm] when the vehicle speed becomes 15 [km/h], the sudden change in the output of the motor M may cause a driver to feel discomfort or unpleasantness, and thus the marketability of the electric bicycle 10 may decrease. From a viewpoint of preventing the sudden change in the output of the motor M, the motor control unit 450 may gradually decrease the output of the motor M before the vehicle speed becomes 15 [km/h] in the EV traveling mode.

### <Example of Traveling Mode Transition in Electric Bicycle>

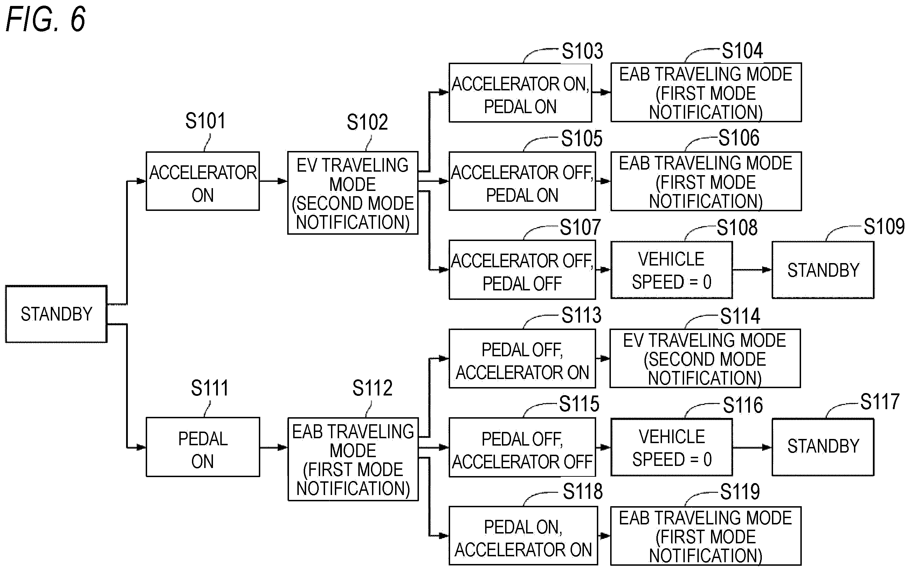

Next, an example of a traveling mode transition in the electric bicycle 10 will be described with reference to FIG. 6. As shown in FIG. 6, when the accelerator grip 74a is operated in a "standby state" in which the driving of the motor M is stopped (step S101), the control device 40 takes the electric bicycle 10 into the EV traveling mode (step S 102). When the electric bicycle 10 is in the EV traveling mode, the control device 40 notifies of the EV traveling mode by causing the front notification lamp 90a and the rear notification lamp 90b to perform the notification of the second manner, toward the outside of the electric bicycle 10.

When the crank pedal 79 is operated while the electric bicycle 10 is in the EV traveling mode and the accelerator grip 74a is operated (step S103), the control device 40 takes the electric bicycle 10 into the EAB traveling mode (step S 104). When the electric bicycle 10 is in the EAB traveling mode, the control device 40 notifies of the EAB traveling mode by causing the front notification lamp 90a and the rear notification lamp 90b to perform the notification of the first manner, toward the outside of the electric bicycle 10.

As described above, the control device 40 prohibits the motor M from driving according to the accelerator opening degree, in accordance with the switching from the EV traveling mode to the EAB traveling mode. Therefore, even in the switching from the EV traveling mode to the EAB traveling mode when the accelerator grip 74a is operated, the control device 40 can prevent the output of the torque corresponding to the accelerator opening degree from the motor M.

Also, when the crank pedal 79 is operated while the electric bicycle 10 is in the EV traveling mode and the accelerator grip 74a is not operated (step S105), the control device 40 takes the electric bicycle 10 into the EAB traveling mode (step S106). That is, when the crank pedal 79 is operated while the electric bicycle 10 is in the EV traveling mode, the control device 40 can take the electric bicycle 10 into the EAB traveling mode regardless of whether there is an operation on the accelerator grip 74a at that time.

When the electric bicycle 10 is in the EV traveling mode, neither the operation on the accelerator grip 74a nor the operation on the crank pedal 79 is performed (step S107), and when the electric bicycle 10 decelerates and the vehicle speed becomes 0 (step S108), the electric bicycle 10 enters the standby state again (step S109).

On the other hand, when the crank pedal 79 is operated in the standby state (step S111), the control device 40 takes the electric bicycle 10 into the EAB traveling mode (step

S112). When the electric bicycle 10 is in the EAB traveling mode, the control device 40 notifies of the EAB traveling mode by causing the front notification lamp 90a and the rear notification lamp 90b to perform the notification of the first manner, toward the outside of the electric bicycle 10.

When the accelerator grip 74a is operated while the electric bicycle 10 is in the EAB traveling mode and the crank pedal 79 is not operated (step S113), the control device 40 takes the electric bicycle 10 into the EV traveling mode (step S114). When the electric bicycle 10 is in the EV traveling mode, the control device 40 notifies of the EV traveling mode by causing the front notification lamp 90a and the rear notification lamp 90b to perform the notification of the second manner, toward the outside of the electric bicycle 10.

When the electric bicycle 10 is in the EAB traveling mode, neither the operation on the accelerator grip 74a nor the operation on the crank pedal 79 is performed (step S115), and when the electric bicycle 10 decelerates and the vehicle speed becomes 0 (step S116), the electric bicycle 10 enters the standby state again (step S117).

Even if the accelerator grip 74a is operated while the electric bicycle 10 is in the EAB traveling mode and the crank pedal 79 is operated (step S118), the control device 40 continues the EAB traveling mode as it is (step S119).

As described above, the driver can take the electric bicycle 10 into the EV traveling mode by operating the accelerator grip 74a, and can take the electric bicycle 10 into the EAB traveling mode by operating the crank pedal 79.

As described above, the control device 40 performs a notification method for notifying of the traveling mode (that is, the driving state) of the electric bicycle 10 toward the outside of the electric bicycle 10, the notification method including a step of notifying in the first manner (for example, see step S112) in the EAB traveling mode (that is, the EAB driving state), and a step of notifying in the second manner (for example, see step S114) in the EV traveling mode (that is, the EV driving state) after switching from the EAB traveling mode to the EV traveling mode. Accordingly, it is possible to notify of the traveling mode (that is, the driving state) of the electric bicycle 10 toward the outside of the electric bicycle 10.

By notifying of the traveling mode (that is, the driving state) of the electric bicycle 10 toward the outside of the electric bicycle 10, the traffic participant around the electric bicycle 10 can determine whether the electric bicycle 10 is traveling in the EAB traveling mode (that is, the EAB driving state) or in the EV traveling mode (that is, the EV driving state) based on modes of the notification of the electric bicycle 10, and can easily determine whether the electric bicycle 10 is appropriately traveling according to a state, a situation, or the like of a travel environment. Therefore, it is possible to further enhance an awareness of the driver (that is, the rider) that causes the electric bicycle 10 to travel appropriately according to the state, the situation, or the like of the travel environment, and the electric bicycle 10 can travel in an appropriate traveling mode (that is, driving state).

In the example described here, when the crank pedal 79 is operated while the electric bicycle 10 is in the EV traveling mode and the accelerator grip 74a is operated, the control device 40 takes the electric bicycle 10 into the EAB traveling mode (see steps S103 and S104), but the present invention is not limited thereto. For example, even if the crank pedal 79 is operated while the electric bicycle 10 is in the EV traveling mode and the accelerator grip 74a is operated, the control device 40 may continue the EV traveling mode as it is. Alternatively, when the crank pedal 79 is operated while the electric bicycle 10 is in the EV traveling mode and the accelerator grip 74a is operated, the control device 40 may stop the driving of the motor M and shift the electric bicycle 10 to the standby state.

In the example described here, even if the accelerator grip 74a is operated while the electric bicycle 10 is in the EAB traveling mode and the crank pedal 79 is operated, the control device 40 continues the EAB traveling mode as it is (see steps S 118 and S 119), but the present invention is not limited thereto. For example, when the accelerator grip 74a is operated while the electric bicycle 10 is in the EAB traveling mode and the crank pedal 79 is operated, the control device 40 may take the electric bicycle 10 into the EV traveling mode. Alternatively, when the accelerator grip 74a is operated while the electric bicycle 10 is in the EAB traveling mode and the crank pedal 79 is operated, the control device 40 may stop the driving of the motor M and shift the electric bicycle 10 to the standby state.

### <Example of Specific Use Method of Electric Bicycle>

Here, an example of a specific use method of the electric bicycle 10 will be described. For example, a driver rides on the electric bicycle 10 on a sidewalk. According to Japanese regulations, it is defined that, when a bicycle travels on a sidewalk, the bicycle needs to move slowly at a portion closer to a roadway from a center of the sidewalk. Therefore, the driver riding on the electric bicycle 10 on the sidewalk pedals the crank pedal 79 to move the electric bicycle 10 toward the roadway while traveling (here, slowly moving) the electric bicycle 10 in the EAB traveling mode.

The driver who reaches the roadway stops pedaling the crank pedal 79 and operates the accelerator grip 74a, so that the electric bicycle 10 can travel in the EV traveling mode. When the electric bicycle 10 is traveling in the EV traveling mode, the driver can cause the electric bicycle 10 to travel in the EAB traveling mode by appropriately pedaling the crank pedal 79. For example, when the driver wishes to increase the vehicle speed to be greater than 15 [km/h], the driver may cause the electric bicycle 10 to travel in the EAB traveling mode by pedaling the crank pedal 79. When the driver gets tired to pedal the crank pedal 79, the driver may cause the electric bicycle 10 to travel in the EV traveling mode by operating the accelerator grip 74a.

The driver who arrives in the vicinity of a destination takes the electric bicycle 10 into the EAB traveling mode, and returns the electric bicycle 10 to the sidewalk and gets off the electric bicycle 10 on the sidewalk after confirming that the electric bicycle 10 is in a slow moving state (that is, a state in which the electric bicycle 10 can travel on the sidewalk according to Japanese regulations). In order for the driver to appropriately determine whether the electric bicycle 10 is in the slow moving state, the electric bicycle 10 may include a slow moving state notification unit that notifies the driver (that is, the rider) of the slow moving state (for example, a speed at which the electric bicycle 10 can immediately stop) when the electric bicycle 10 is in the slow moving state in the EAB traveling mode.

### <EV Traveling Mode Switching Control>

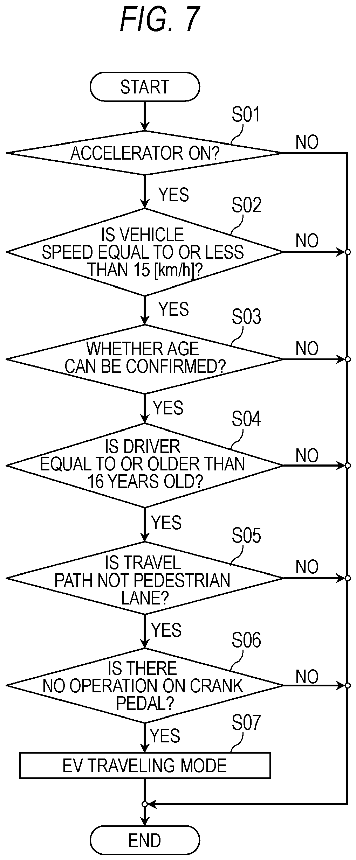

As described above, it is preferable that the control device 40 performs the switching to the EV traveling mode in consideration of not only the operation on the accelerator grip 74a but also the vehicle speed, the age of the driver, the type of the travel path, and the like. Hereinafter, an example of EV traveling mode switching control for taking the electric bicycle 10 into the EV traveling mode will be described with reference to FIG. 7. For example, the control device 40 performs the EV traveling mode switching control shown in FIG. 7 at a predetermined cycle when the electric assist unit 20 is powered on. An EV traveling mode switching control program that causes the control device 40 to perform the EV traveling mode switching control shown in FIG. 7 is stored in advance in, for example, the storage medium of the control device 40.

First, the control device 40 determines whether the accelerator grip 74a is operated (step S01). When the accelerator grip 74a is not operated (step S01: NO), the control device 40 ends a series of processes shown in FIG. 7 as it is. In a case where the series of processes shown in FIG. 7 is ended without executing the process of step S07 to be described later, the control device 40 takes the electric bicycle 10 into the EAB traveling mode (that is, the EAB driving state), and controls the motor M such that the assist force determined by the stepping force of the crank pedal 79 and the assist ratio corresponding to the vehicle speed is generated.

When the accelerator grip 74a is operated (step S01: YES), the control device 40 determines whether a vehicle speed is equal to or lower than 15 [km/h] (step S02). When the vehicle speed exceeds 15 [km/h] (step S02: NO), the control device 40 ends the series of processes shown in FIG. 7 as it is.

On the other hand, when the vehicle speed is equal to or lower than 15 [km/h] (step S02: YES), the control device 40 determines whether an age of a driver can be confirmed (step S03). In step S03, for example, the control device 40 determines that the age can be confirmed in a case where the above age information can be acquired, and determines that the age cannot be confirmed in a case where the age information cannot be acquired. Then, in the case where the age cannot be confirmed (step S03: NO), the control device 40 ends the series of processes shown in FIG. 7 as it is.

On the other hand, in the case where the age can be confirmed (step S03: YES), the control device 40 determines whether the driver is equal to or older than 16 years old based on the acquired age information (step S04). In a case where the driver is under 16 years old (step S04: NO), the control device 40 ends the series of processes shown in FIG. 7 as it is.

On the other hand, in a case where the driver is equal to or older than 16 years old (step S04: YES), the control device 40 determines whether a travel path on which the electric bicycle 10 travels is a vehicle lane (that is, is not a pedestrian lane) based on the acquired travel path information (step S05). In a case where the travel path on which the electric bicycle 10 travels is not the vehicle lane but the pedestrian lane (step S05: NO), the control device 40 ends the series of processes shown in FIG. 7 as it is.

On the other hand, in a case where the travel path on which the electric bicycle 10 travels is the vehicle lane (step S05: YES), the control device 40 determines whether there is no operation on the crank pedal 79 (step S06). When there is an operation on the crank pedal 79 (step S06: NO), that is, when the crank pedal 79 is being pedaled, the control device 40 ends the series of processes shown in FIG. 7 as it is.

On the other hand, when there is no operation on the crank pedal 79 (step S06: YES), that is, when the crank pedal 79 is not being pedaled, the control device 40 takes the electric bicycle 10 into the EV traveling mode (that is, the EV driving state) (step S07), and ends the series of processes shown in FIG. 7. As described above, in a case where the series of processes shown in FIG. 7 is ended after executing the process of step S07, the control device 40 controls the motor M such that the power corresponding to the accelerator opening degree is generated in the range equal to or less than the upper limit torque.

### <First Example of Temporal Changes in Torque Value Tq, Cadence, and Vehicle Speed>

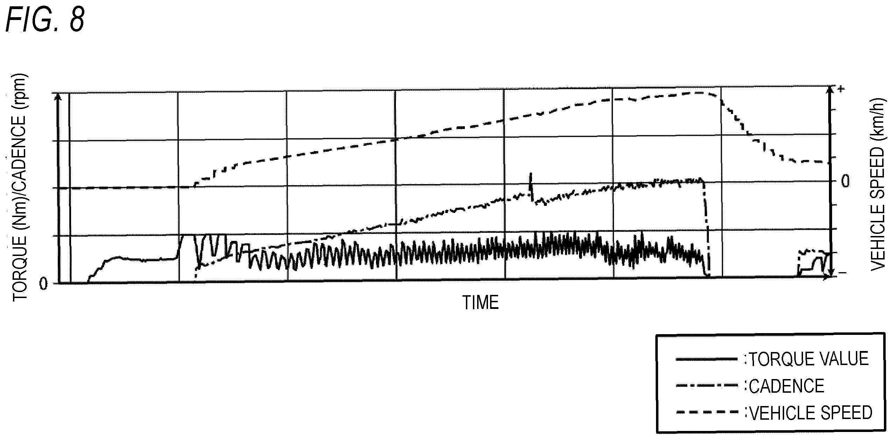

Next, a first example of temporal changes in the torque value Tq, the cadence, and the vehicle speed of the electric bicycle 10 will be described with reference to FIG. 8. The first example is an example of a case where a driver starts to pedal the crank pedal 79 from a state where the electric bicycle 10 is stopped, and the electric bicycle 10 travels on the flat ground in the EAB traveling mode. In FIG. 8, a solid line indicates the torque value Tq, a one-dot chain line indicates the cadence, and a broken line indicates the vehicle speed. In FIG. 8, the more to the right, the later in chronological order.

As shown in FIG. 8, when the electric bicycle 10 is traveling on the flat ground in the EAB traveling mode, the torque value Tq is substantially constant, and the vehicle speed increases in accordance with an increase in the cadence. When the driver stops pedaling the crank pedal 79 (when the cadence becomes 0), the vehicle speed decreases.

### <Second Example of Temporal Changes in Torque Value Tq, Cadence, and Vehicle Speed>

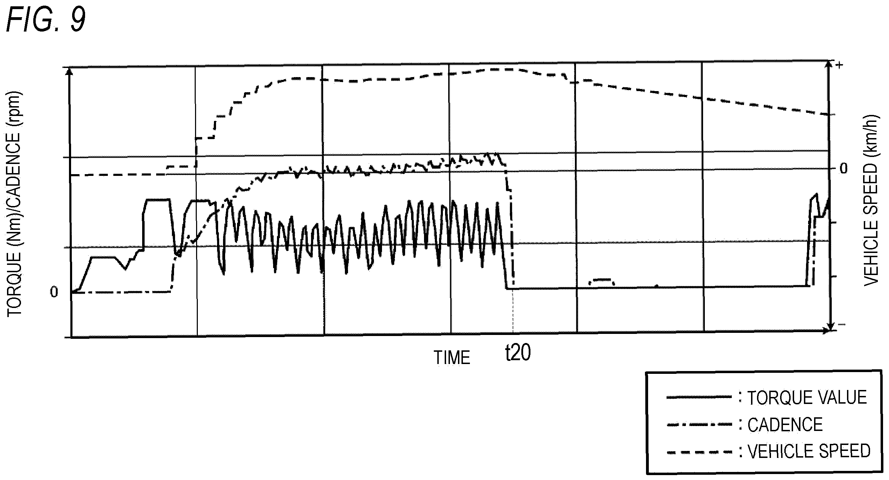

Next, a second example of the temporal changes in the torque value Tq, the cadence, and the vehicle speed of the electric bicycle 10 will be described with reference to FIG. 9. The second example is different from the first example in that the travel path on which the electric bicycle 10 travels becomes a downward slope while the electric bicycle 10 is traveling in the EAB traveling mode. In the following second example, parts different from those of the above first example will be mainly described, and the description of parts similar to those of the first example will be appropriately omitted.

At a time t20 shown in FIG. 9, since the travel path on which the electric bicycle 10 travels becomes a downward slope, the driver stops pedaling the crank pedal 79. Accordingly, from the time t20, the torque value Tq and the cadence become 0. In a case of the second example, since the travel path is the downward slope, the vehicle speed is maintained to some extent even after the driver stops pedaling the crank pedal 79, as compared with a case where the travel path is the flat ground.

### <Effects of Electric Bicycle>

As described above, the electric bicycle 10 of the present embodiment is switchable between the EAB traveling mode for traveling in the EAB driving state in which the wheel (for example, the rear wheel 78) is driven by at least the force (that is, the stepping force) input to the crank pedal 79, and the EV traveling mode for traveling in the EV driving state in which the wheel (for example, the rear wheel 78) is driven by the power of the motor M alone. Accordingly, the electric bicycle 10 can travel in an appropriate driving state.

As described above, the EAB traveling mode can also be referred to as the high-speed electric traveling mode in which the rear wheel 78 is driven by the power of the motor M with the maximum speed of 24 [km/h] as the upper limit. The EV traveling mode can also be referred to as the electric traveling mode (the medium-speed electric traveling mode) in which the rear wheel 78 is driven by the power of the motor M with the maximum speed of 15 [km/h] as the upper limit. Therefore, the electric bicycle 10 is switchable between the EAB traveling mode as the above high-speed electric traveling mode and the EV traveling mode as the above electric traveling mode. Accordingly, the electric bicycle 10 can travel in an appropriate traveling mode (that is, driving state) and at the maximum speed.

The electric bicycle 10 travels in the EAB driving state in the EAB traveling mode. In the EAB driving state, in addition to the rear wheel 78 being driven by the force (that is, the stepping force) input to the crank pedal 79, the rear wheel 78 is also driven by the power of the motor M with the maximum speed of 24 [km/h] as the upper limit as described above. Accordingly, when the electric bicycle 10 is in the EAB traveling mode and the vehicle speed is equal to or lower than 24 [km/h], the electric bicycle 10 can travel by the force input to the crank pedal 79 (that is, the stepping force) and the power of the motor M.

In the EV traveling mode, when there is an input of a force to the crank pedal 79 (that is, the operation on the crank pedal 79), the electric bicycle 10 switches to the EAB traveling mode (that is, the EAB driving state). Accordingly, it is possible to receive a switching operation to the EAB traveling mode from the driver by using the crank pedal 79 that receives an operation for driving the wheel in the EAB traveling mode. Therefore, the switching to the EAB traveling mode can be performed in response to a request from the driver with a simple configuration that does not require an operation switch or the like for receiving the switching operation to the EAB traveling mode separately from the crank pedal 79. As for the presence or absence of the input of the force to the crank pedal 79, it may be determined that there is an input to the crank pedal 79 in a case where the output value of the torque sensor SE2 or the cadence sensor SE5 exceeds a predetermined threshold value. In this way, it is possible to prevent the switching to the EAB traveling mode against an intention of the driver, for example, in a case where the driver unintentionally touches the crank pedal 79.

By switching to the EAB traveling mode when there is the input of the force to the crank pedal 79 in the EV traveling mode, it is possible to distinguish between the EAB traveling mode and the EV traveling mode.

In the EV traveling mode, the electric bicycle 10 drives the motor M based on the operation on the accelerator grip 74a. Accordingly, in the EV traveling mode, the electric bicycle 10 can travel by the power of the motor M according to the request from the driver received via the accelerator grip 74a. Instead of the accelerator grip 74a, an accelerator lever, an accelerator stick, or the like may be provided in the vicinity of the grip portion.

When there is the input of the force to the crank pedal 79 (that is, the operation on the crank pedal 79) in the EV traveling mode, the electric bicycle 10 prohibits the motor M from driving based on the operation on the accelerator grip 74a, thereby making it possible to distinguish between the EAB traveling mode and the EV traveling mode.

In the EAB traveling mode, the electric bicycle 10 controls the motor M based on the amount of the force input to the crank pedal 79 (specifically, the torque value Tq). Accordingly, in the EAB traveling mode, the electric bicycle 10 can travel by the input of the force to the crank pedal 79 and appropriate power of the motor M according to the input amount. Specifically, in the EV traveling mode, the electric bicycle 10 drives the motor M based on the operation on the accelerator grip 74a. On the other hand, in the EAB traveling mode, the electric bicycle 10 prohibits the driving of the motor M based on the operation on the accelerator grip 74a, and controls the motor M based on the amount of the force input to the crank pedal 79. Accordingly, the electric bicycle 10 can travel by the appropriate power of the motor M in each of the EAB traveling mode and the EV traveling mode.

The electric bicycle 10 is switchable between the EAB traveling mode and the EV traveling mode based on the age of the driver. Accordingly, the electric bicycle 10 can travel in an appropriate driving state according to the age of the driver. Specifically, in a case where the age of the driver is less than the predetermined age, the electric bicycle 10 prohibits the switching from the EAB traveling mode to the EV traveling mode (that is, switching from the EAB driving state to the EV driving state). Accordingly, when a driver with an age less than the predetermined age drives the electric bicycle 10, the electric bicycle 10 can be avoided from traveling in the EV traveling mode.

In the case where the age of the driver is less than the predetermined age, the electric bicycle 10 may prohibit the traveling in the EV traveling mode (that is, the driving in the EV driving state) itself. Also in this way, when the driver with the age less than the predetermined age drives the electric bicycle 10, the electric bicycle 10 can be avoided from traveling in the EV traveling mode. For example, in a state of standard setting (so-called default), the traveling in the EV traveling mode may be prohibited in advance, and in a case where the age of the driver is equal to or greater than the predetermined age, the electric bicycle 10 may permit the switching from the EAB traveling mode to the EV traveling mode (that is, the switching from the EAB driving state to the EV driving state), or may permit the traveling in the EV traveling mode (that is, the driving in the EV driving state). Also in this way, when the driver with the age less than the predetermined age drives the electric bicycle 10, the electric bicycle 10 can be avoided from traveling in the EV traveling mode.

The electric bicycle 10 is switchable between the EAB traveling mode and the EV traveling mode based on a determination result of whether the driver has the license for driving the electric bicycle 10 to travel in the EV traveling mode. Accordingly, the electric bicycle 10 can travel in an appropriate driving state according to the possession state of the license of the driver. Specifically, in a case where the driver has the license for driving the electric bicycle 10 to travel in the EV traveling mode, the electric bicycle 10 permits the switching from the EAB traveling mode to the EV traveling mode (that is, the switching from the EAB driving state to the EV driving state). Accordingly, in the case where the driver has the license for driving the electric bicycle 10 to travel in the EV traveling mode, the electric bicycle 10 can travel in the EV traveling mode, and the convenience of the electric bicycle 10 for the driver can be improved.

In the case where the driver has the license for driving the electric bicycle 10 to travel in the EV traveling mode, the electric bicycle 10 may permit the traveling in the EV traveling mode (that is, the driving in the EV driving state) itself. Also in this way, in the case where the driver has the license for driving the electric bicycle 10 to travel in the EV traveling mode, the electric bicycle 10 can travel in the EV traveling mode, and the convenience of the electric bicycle 10 for the driver can be improved. For example, in the state of the standard setting, the traveling in the EV traveling mode may be permitted in advance, and the electric bicycle 10 may prohibit the switching from the EAB traveling mode to the EV traveling mode (that is, the switching from the EAB driving state to the EV driving state) or may prohibit the traveling in the EV traveling mode (that is, the driving in the EV driving state) itself based on the determination that the driver does not have the license for driving the electric bicycle 10 to travel in the EV traveling mode. Also in this way, in the case where the driver has the license for driving the electric bicycle 10 to travel in the EV traveling mode, the electric bicycle 10 can travel in the EV traveling mode, and the convenience of the electric bicycle 10 for the driver can be improved.

The electric bicycle 10 is switchable between the EAB traveling mode and the EV traveling mode based on the type of the travel path on which the electric bicycle 10 travels. Accordingly, the electric bicycle 10 can travel in an appropriate driving state according to the type of the travel path on which the electric bicycle 10 travels. Specifically, the electric bicycle 10 prohibits the switching from the EAB traveling mode to the EV traveling mode when the electric bicycle 10 is traveling on the pedestrian lane. Accordingly, when the electric bicycle 10 is traveling on the pedestrian lane, the electric bicycle 10 can be avoided from traveling in the EV traveling mode.

When the electric bicycle 10 is traveling on the pedestrian lane, the electric bicycle 10 may prohibit the traveling in the EV traveling mode (that is, the driving in the EV driving state) itself. Also in this way, when the electric bicycle 10 is traveling on the pedestrian lane, the electric bicycle 10 can be avoided from traveling in the EV traveling mode. For example, in the state of the standard setting, the traveling in the EV traveling mode may be prohibited in advance, and in a case where the type of the travel path on which the electric bicycle 10 travels is the vehicle lane (that is, a travel path other than the pedestrian lane), the electric bicycle 10 may permit the switching from the EAB traveling mode to the EV traveling mode (that is, the switching from the EAB driving state to the EV driving state), or may permit the traveling in the EV traveling mode (that is, the driving in the EV driving state). Also in this way, when the electric bicycle 10 is traveling on the pedestrian lane, the electric bicycle 10 can be avoided from traveling in the EV traveling mode.

The electric bicycle 10 includes the front notification lamp 90a and the rear notification lamp 90b as the notification unit that notifies whether the electric bicycle 10 is in the EAB traveling mode or the EV traveling mode (that is, in the EAB driving state or the EV driving state) toward the outside of the electric bicycle 10. Accordingly, it is possible to notify whether the electric bicycle 10 is in the EAB traveling mode or the EV traveling mode (that is, the EAB driving state or the EV driving state) toward the outside.

Specifically, the front notification lamp 90a is provided to be perceivable from the front side and the lateral side with respect to the electric bicycle 10, and thus a traffic participant present in the front side and lateral side with respect to the electric bicycle 10 can be notified of the traveling mode (that is, the driving state) of the electric bicycle 10 by the front notification lamp 90a. The rear notification lamp 90b is provided to be perceivable from the rear side and the lateral side with respect to the electric bicycle 10, and thus a traffic participant present in the rear side and lateral side with respect to the electric bicycle 10 can be notified of the traveling mode (that is, the driving state) of the electric bicycle 10 by the rear notification lamp 90b. As described above, the front notification lamp 90a may be perceivable (for example, visible) at least from the front side with respect to the electric bicycle 10, and the rear notification lamp 90b may be perceivable (for example, visible) at least from the rear side with respect to the electric bicycle 10.

The front notification lamp 90a and the rear notification lamp 90b are turned off as the notification of the first manner when the electric bicycle 10 is in the EAB traveling mode, and are turned on as the notification of the second manner when the electric bicycle 10 is in the EV traveling mode. Accordingly, it is possible to clearly notify the outside of the electric bicycle 10 whether the electric bicycle 10 is in the EAB traveling mode or the EV traveling mode according to a difference in modes of the notification performed by the front notification lamp 90a and the rear notification lamp 90b. As described above, the notification of the first manner and the notification of the second manner are not limited to turning off and turning on the front notification lamp 90a and the rear notification lamp 90b, and may be different in for example, at least one of the emission light color, the emission light intensity, and the blinking interval (or the flickering interval) of the front notification lamp 90a and the rear notification lamp 90b.

The front notification lamp 90a is provided on the front side of the electric bicycle 10, and the rear notification lamp 90b is provided on the rear side of the electric bicycle 10 with respect to the front notification lamp 90a. Accordingly, the front notification lamp 90a can be easily perceived from the front side of the electric bicycle 10, and the rear notification lamp 90b can be easily perceived from the rear side of the electric bicycle 10.

The electric bicycle 10 is a bicycle including the front wheel 73, the rear wheel 78, and the seat 76 as a seating portion on which the driver (that is, the rider) sits. In the electric bicycle 10, the crank pedal 79 is an input unit that receives the stepping force from the leg of the rider. Accordingly, the electric bicycle 10, which is the bicycle on which the driver sits and rides, can travel in an appropriate driving state.

A notification device according to an embodiment of the present invention can be implemented by, for example, the front notification lamp 90a, the rear notification lamp 90b, and the control device 40 mounted on the electric bicycle 10 including the travel path information acquisition unit 420 that acquires the type of the travel path. As described above, it is assumed that the electric bicycle 10 travels on the pedestrian lane in the EAB traveling mode (that is, the EAB driving state), and travels on the vehicle lane (that is, the travel path other than the pedestrian lane) in the EV traveling mode (that is, the EV driving state). In this case, the notification device of the present embodiment implemented by the front notification lamp 90a, the rear notification lamp 90b, and the control device 40 can be said to perform the notification of the first manner when the travel path information acquisition unit 420 acquires that the electric bicycle 10 is traveling on the pedestrian lane (for example, see step S05: NO). The notification device of the present embodiment can be said to perform the notification of the second manner different from the first manner when the travel path information acquisition unit 420 acquires that the electric bicycle 10 is not traveling on the pedestrian lane or acquires that the electric bicycle 10 is traveling on the travel path other than the pedestrian lane (for example, the vehicle lane) (for example, see step S05: YES and step S07). Accordingly, the traffic participant around the electric bicycle 10 can determine whether the electric bicycle 10 is traveling on the pedestrian lane in the EAB traveling mode (that is, the EAB driving state) or traveling on the travel path other than the pedestrian lane in the EV traveling mode (that is, the EV driving state) based on the modes of the notification of the electric bicycle 10, and can easily determine whether the electric bicycle 10 is appropriately traveling according to the type of the travel path. Therefore, it is possible to further enhance an awareness of the driver (that is, the rider) that causes the electric bicycle 10 to travel appropriately according to the type of the travel path (more specifically, to travel in an appropriate traveling mode according to the type of the travel path), and the electric bicycle 10 can travel in the appropriate traveling mode according to the type of the travel path.

Further, the notification device of the present embodiment can also be said to perform the notification of the second manner when the travel path information acquisition unit 420 acquires that the electric bicycle 10 is traveling on the vehicle lane (for example, see step S05: YES and step S07). The notification device of the present embodiment can also be said to perform the notification of the first manner different from the second manner when the travel path information acquisition unit 420 acquires that the electric bicycle 10 is not traveling on the vehicle lane or acquires that the electric bicycle 10 is traveling on a travel path other than the vehicle lane (for example, the pedestrian lane) (for example, see step S05: NO). Accordingly, the traffic participant around the electric bicycle 10 can determine whether the electric bicycle 10 is traveling on the vehicle lane in the EV traveling mode (that is, the EV driving state) or traveling on the travel path other than the vehicle lane in the EAB traveling mode (that is, the EAB driving state) based on the modes of the notification of the electric bicycle 10, and can easily determine whether the electric bicycle 10 is appropriately traveling according to the type of the travel path. Therefore, it is possible to further enhance an awareness of the driver (that is, the rider) that causes the electric bicycle 10 to travel appropriately according to the type of the travel path (more specifically, to travel in an appropriate traveling mode according to the type of the travel path), and the electric bicycle 10 can travel in the appropriate traveling mode according to the type of the travel path.

### <First Modification>

Next, modifications of the above embodiment will be described. A first modification to be described below is different from the above embodiment in that a request for driving the motor M from a driver is acquired via the crank pedal 79. In the following description of the first modification, parts different from those of the above embodiment will be mainly described, and parts similar to those of the above embodiment will be denoted by the same reference numerals and the description thereof will be appropriately omitted.

In the first modification, the driving state control unit 430 takes the electric bicycle 10 into an EV traveling mode when a vehicle speed is equal to or lower than a predetermined speed (for example, 15 [km/h]), and takes the electric bicycle 10 into an EAB traveling mode when the vehicle speed exceeds the predetermined speed.

The motor control unit 450 controls the motor M based on an input of a force to the crank pedal 79 both when the electric bicycle 10 is in the EV traveling mode and in the EAB traveling mode, but changes control modes of the motor M based on a traveling mode of the electric bicycle 10.

Specifically, when the electric bicycle 10 is in the EAB traveling mode, as described above, the motor control unit 450 controls the motor M such that an assist force determined by a stepping force of the crank pedal 79 and an assist ratio (see the one-dot chain line in FIG. 4) corresponding to the vehicle speed is generated. On the other hand, when the electric bicycle 10 is in the EV traveling mode, the motor control unit 450 controls the motor M such that power corresponding to a cadence is generated in a range equal to or less than an upper limit torque (see a solid line in FIG. 5).

Also in the first modification, the driving state control unit 430 can prohibit switching to the EV traveling mode by the determination unit 431 and the switching prohibition unit 432 based on an age of a driver, a possession state of a license, a type of a travel path of the electric bicycle 10, or the like.

### <EV Traveling Mode Switching Control of First Modification>

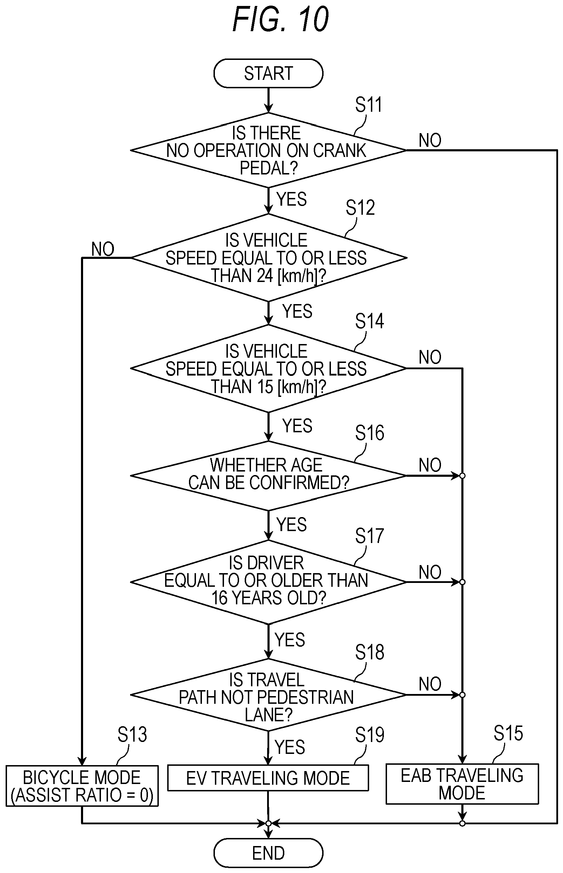

Next, an example of EV traveling mode switching control of the first modification will be described with reference to FIG. 10. For example, the control device 40 of the modification performs the EV traveling mode switching control shown in FIG. 10 at a predetermined cycle when the electric assist unit 20 is powered on. An EV traveling mode switching control program that causes the control device 40 to perform the EV traveling mode switching control shown in FIG. 10 is stored in advance in a storage medium of the control device 40 or the like.

First, the control device 40 determines whether the crank pedal 79 is operated (step S11). When the crank pedal 79 is not operated (step S11: NO), the control device 40 ends a series of processes shown in FIG. 10 as it is.

When the crank pedal 79 is operated (step S11: YES), the control device 40 determines whether a vehicle speed is equal to or lower than 24 [km/h] (step S12). When the vehicle speed exceeds 24 [km/h] (step S12: NO), the control device 40 takes the electric bicycle 10 into the EAB traveling mode (however, an assist ratio is 0 as shown in FIG. 4) (step S13), and ends the series of processes shown in FIG. 10. In the present description and the like, the EAB traveling mode in which the assist ratio is 0 (that is, an assist force generated by the motor M is 0) is also simply referred to as a bicycle mode in order to distinguish from the EAB traveling mode in which the assist ratio is not 0.

On the other hand, when the vehicle speed is equal to or lower than 24 [km/h] (step S12: YES), the control device 40 determines whether the vehicle speed is equal to or lower than 15 [km/h] (step S14). When the vehicle speed exceeds 15 [km/h] (step S14: NO), the control device 40 takes the electric bicycle 10 into the EAB traveling mode (step S15), controls the motor M such that an assist force determined by a stepping force of the crank pedal 79 and the assist ratio corresponding to the vehicle speed is generated, and ends the series of processes shown in FIG. 10.

On the other hand, when the vehicle speed is equal to or lower than 15 [km/h] (step S14: YES), the control device 40 determines whether an age of a driver can be confirmed (step S16) as in step S03 described above. Then, in a case where the age cannot be confirmed (step S16: NO), the control device 40 proceeds to the process of step S15 described above.

On the other hand, in a case where the age can be confirmed (step S16: YES), the control device 40 determines whether the driver is equal to or older than 16 years old (step S17) as in step S04 described above. In a case where the driver is under 16 years old (step S17: NO), the control device 40 proceeds to the process of step S15 described above.

On the other hand, in a case where the driver is equal to or older than 16 years old (step S17: YES), the control device 40 determines whether a travel path on which the electric bicycle 10 travels is a vehicle lane (that is, is not a pedestrian lane) (step S18) as in step S05 described above. When the travel path on which the electric bicycle 10 travels is not the vehicle lane but the pedestrian lane (step S18: NO), the control device 40 proceeds to the process of step S15 described above.

On the other hand, when the travel path on which the electric bicycle 10 travels is the vehicle lane (step S18: YES), the control device 40 takes a driving state of the electric bicycle 10 into the EV traveling mode (step S19), controls the motor M such that power corresponding to a cadence is generated in a range equal to or less than an upper limit torque, and ends the series of processes shown in FIG. 10.

### <Effects of First Modification>

As described above, according to the electric bicycle 10 of the first modification, it is possible to acquire a request for driving the motor M from the driver with a simple configuration in which the accelerator grip 74a is not provided. In the EV traveling mode, the electric bicycle 10 can travel by the power of the motor M according to the request from the driver received via the crank pedal 79.

### <Second Modification>

Next, a second modification will be described. The second modification to be described below is different from the above embodiment in that the electric bicycle 10 is stopped when a traveling mode (that is, a driving state) is switched. In the following description of the second modification, parts different from those of the above embodiment will be mainly described, and parts similar to those of the above embodiment will be denoted by the same reference numerals and the description thereof will be appropriately omitted.

### <Example of Traveling Mode Transition in Electric Bicycle of Second Modification>

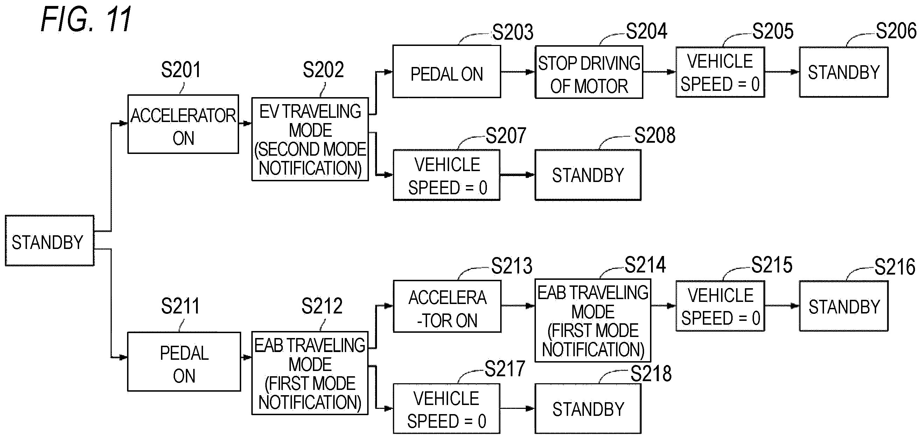

As shown in FIG. 11, when the accelerator grip 74a is operated in a "standby state" in which driving of the motor M is stopped and a vehicle speed is 0 (step S201), the control device 40 takes the electric bicycle 10 into an EV traveling mode (step S202). When the electric bicycle 10 is in the EV traveling mode, the control device 40 notifies of the EV traveling mode by causing the front notification lamp 90a and the rear notification lamp 90b to perform the notification of the second manner, toward the outside of the electric bicycle 10.

Then, when the crank pedal 79 is operated while the electric bicycle 10 is in the EV traveling mode (step S203), the control device 40 stops the driving of the motor M (step S204). Thereafter, when the electric bicycle 10 decelerates and the vehicle speed becomes 0 due to the stop of the driving of the motor M (step S205), the electric bicycle 10 enters the standby state again (step S206), and the traveling mode can be switched.

When the electric bicycle 10 decelerates and the vehicle speed becomes 0 because there is no operation on the accelerator grip 74a while the electric bicycle 10 is in the EV traveling mode (step S207), the electric bicycle 10 enters the standby state again (step S208), and the traveling mode can be switched.

On the other hand, when the crank pedal 79 is operated in the standby state (step S211), the control device 40 takes the electric bicycle 10 into an EAB traveling mode (step S212). When the electric bicycle 10 is in the EAB traveling mode, the control device 40 notifies of the EAB traveling mode by causing the front notification lamp 90a and the rear notification lamp 90b to perform the notification of the first manner, toward the outside of the electric bicycle 10.

Even if the accelerator grip 74a is operated while the electric bicycle 10 is in the EAB traveling mode (step S213), the control device 40 continues the EAB traveling mode as it is without causing the motor M to output a torque corresponding to this operation (that is, an accelerator opening degree) (step S214). Thereafter, when the electric bicycle 10 decelerates and the vehicle speed becomes 0 because there is no operation on the crank pedal 79 (step S215), the electric bicycle 10 enters the standby state again (step S216), and the traveling mode can be switched.

When the electric bicycle 10 decelerates and the vehicle speed becomes 0 because there is no operation on the crank pedal 79 while the electric bicycle 10 is in the EAB traveling mode (step S217), the electric bicycle 10 enters the standby state again (step S218), and the traveling mode can be switched.

### <Effects of Second Modification>

As described above, according to the electric bicycle 10 of the second modification, in the standby state in which the driving of the motor M is stopped and the vehicle speed is 0, a driver can take the electric bicycle 10 into the EV traveling mode by operating the accelerator grip 74a, and can take the electric bicycle 10 into the EAB traveling mode by operating the crank pedal 79. Therefore, the electric bicycle 10 can travel in an appropriate driving state. In the above embodiment, the traveling mode (that is, the driving state) can be switched during the traveling of the electric bicycle 10, but in the second modification, the electric bicycle 10 is required to be stopped when the traveling mode is switched, and thus the driver can more recognize in which traveling mode the electric bicycle 10 is traveling.

In the example described here, when the crank pedal 79 is operated while the electric bicycle 10 is in the EV traveling mode, the control device 40 stops the driving of the motor M (see steps S203 and S204), but the present invention is not limited thereto. For example, even if the crank pedal 79 is operated while the electric bicycle 10 is in the EV traveling mode, the control device 40 may continue the EV traveling mode as it is.

In the example described here, even if the accelerator grip 74a is operated while the electric bicycle 10 is in the EAB traveling mode, the control device 40 continues the EAB traveling mode as it is (see steps S213 and S214), but the present invention is not limited thereto. For example, when the accelerator grip 74a is operated while the electric bicycle 10 is in the EAB traveling mode, the control device 40 may stop the driving of the motor M. Thereafter, when neither an operation on the accelerator grip 74a nor an operation on the crank pedal 79 is performed, and the vehicle speed becomes 0, the electric bicycle 10 may enter the above standby state so as to be in a state in which the traveling mode can be switched.

### <Third Modification>

Next, a third modification will be described. The third modification to be described below is different from the above embodiment in that the electric bicycle 10 can be further switched to an EV low-speed traveling mode. In the following description of the third modification, parts different from those of the above embodiment will be mainly described, and parts similar to those of the above embodiment will be denoted by the same reference numerals and the description thereof will be appropriately omitted.

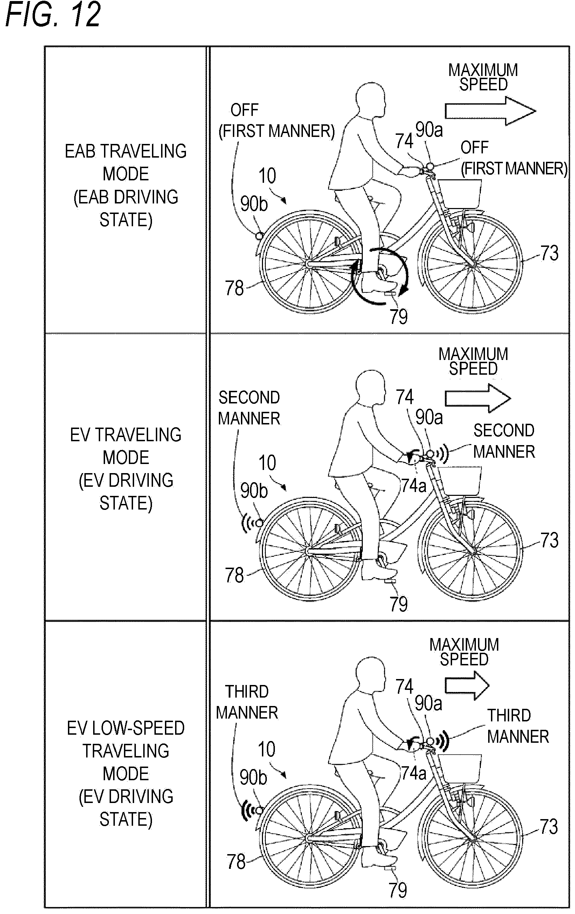

As shown in FIG. 12, the electric bicycle 10 of the third modification is switchable in an EAB traveling mode, an EV traveling mode, and the EV low-speed traveling mode. Here, the EV low-speed traveling mode may be a traveling mode in which the electric bicycle 10 travels by driving the rear wheel 78 using power of the motor M in the EV driving state with a maximum speed (here, for example, 10 [km/h]), as an upper limit, lower than 15 [km/h] which is a maximum speed of the EV traveling mode. Such an EV low-speed traveling mode can also be referred to as a low-speed electric traveling mode in which the rear wheel 78 is driven by the power of the motor M with the maximum speed of 10 [km/h] as the upper limit.

In the third modification, for example, the control device 40 performs switching from the EAB traveling mode to the EV traveling mode or the EV low-speed traveling mode based on an operation on the accelerator grip 74a as in the above embodiment. At the time of performing the switching from the EAB traveling mode to the EV traveling mode or the EV low-speed traveling mode, the control device 40 may determine whether to switch to the EV traveling mode or the EV low-speed traveling mode based on an age of a driver, a type of a travel path, and the like.

For example, the control device 40 performs the switching to the EV traveling mode when a travel path of the electric bicycle 10 is a vehicle lane, and performs the switching to the EV low-speed traveling mode when the travel path of the electric bicycle 10 is a pedestrian lane. The control device 40 may perform the switching to the EV traveling mode when an age of a driver is equal to or greater than a predetermined age (for example, 16 years old), and may perform the switching to the EV low-speed traveling mode when the age of the driver is less than the predetermined age. Further, the control device 40 may perform the switching to the EV traveling mode when a driver has a license for traveling in the EV traveling mode, and may perform the switching to the EV low-speed traveling mode when the driver does not have the license for traveling in the EV traveling mode.

Further, in the third modification, the control device 40 notifies of a traveling mode of the electric bicycle 10 toward the outside, using the front notification lamp 90a and the rear notification lamp 90b, as in the above embodiment. For example, when the electric bicycle 10 is in the EAB traveling mode, the control device 40 notifies of the EAB traveling mode toward the outside of the electric bicycle 10, by causing the front notification lamp 90a and the rear notification lamp 90b to perform a notification of a first manner. When the electric bicycle 10 is in the EV traveling mode, the control device 40 notifies of the EV traveling mode toward the outside of the electric bicycle 10, by causing the front notification lamp 90a and the rear notification lamp 90b to perform a notification of a second manner. When the electric bicycle 10 is in the EV low-speed traveling mode, the control device 40 notifies of the EV low-speed traveling mode toward the outside of the electric bicycle 10 the outside of the electric bicycle 10, by causing the front notification lamp 90a and the rear notification lamp 90b to perform a notification of a third manner. Here, the third manner is a manner different from the first manner and the second manner in, for example, at least one of an emission light color, an emission light intensity, or a blinking interval.

As an example, as shown in FIG. 12, it is assumed that the notification of the first manner is performed by turning off the front notification lamp 90a and the rear notification lamp 90b (shown as OFF), and the notification of the second manner is performed by turning on the front notification lamp 90a and the rear notification lamp 90b. In this case, in the notification of the third manner, the front notification lamp 90a and the rear notification lamp 90b may be turned on (emit light) at an emission light color, an emission light intensity, or a blinking interval different from that of the notification of the second manner.

Of course, the notification of the first manner is not limited to turning off the front notification lamp 90a and the rear notification lamp 90b. Therefore, in the notification of the first manner, the notification of the second manner, and the notification of the third manner, for example, the front notification lamp 90a and the rear notification lamp 90b may be turned on in different emission light colors.

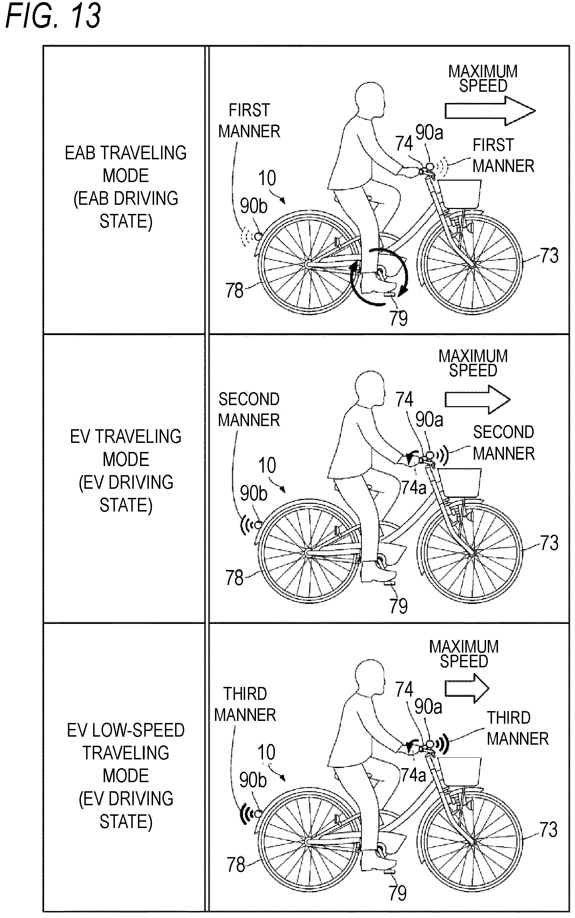

More specifically, it is assumed that the front notification lamp 90a and the rear notification lamp 90b are changeable in emission light color. In this case, as shown in FIG. 13, the control device 40 may turn on the front notification lamp 90a and the rear notification lamp 90b in light blue as the notification of the first manner in the EAB traveling mode, may turn on the front notification lamp 90a and the rear notification lamp 90b in yellow as the notification of the second manner in the EV traveling mode, and may turn on the front notification lamp 90a and the rear notification lamp 90b in orange as the notification of the third manner in the EV low-speed traveling mode.

As another example, the control device 40 may cause the front notification lamp 90a and the rear notification lamp 90b to blink in yellow and at a long interval cycle as the notification of the first manner in the EAB traveling mode, may cause the front notification lamp 90a and the rear notification lamp 90b to blink in yellow and at a medium interval cycle as the notification of the second manner in the EV traveling mode, and may cause the front notification lamp 90a and the rear notification lamp 90b to blink in yellow and at a short interval cycle as the notification of the third manner in the EV low-speed traveling mode.

Further, in the notification of the first manner, the notification of the second manner, and the notification of the third manner, at least two of the emission light color, the emission light intensity, and the blinking interval (for example, the emission light color and the blinking interval) of the front notification lamp 90a and the rear notification lamp 90b may be different. For example, the front notification lamp 90a and the rear notification lamp 90b may blink in light blue and at a long interval cycle as the notification of the first manner in the EAB traveling mode, the front notification lamp 90a and the rear notification lamp 90b may blink in yellow and at a medium interval cycle as the notification of the second manner in the EV traveling mode, and the front notification lamp 90a and the rear notification lamp 90b may blink in orange and at a short interval cycle as the notification of the third manner in the EV low-speed traveling mode. Any one of the notification of the first manner, the notification of the second manner, and the notification of the third manner may be a manner in which the front notification lamp 90a and the rear notification lamp 90b are turned off.

As described above, it is assumed that the switching to the EV traveling mode is performed when the travel path of the electric bicycle 10 is the vehicle lane, and the switching to the EV low-speed traveling mode is performed when the travel path of the electric bicycle 10 is the pedestrian lane. In this case, it is assumed that a distance between the electric bicycle 10 and a pedestrian is shorter when traveling in the EV low-speed traveling mode than when traveling in the EV traveling mode. Therefore, in this case, it is preferable that the notification of the third manner has a higher notification intensity (in other words, a higher notification degree) such as a darker emission light color, a shorter blinking cycle, or a higher emission light intensity than the notification of the second manner. In this way, the notification of the third manner can be made easier for the pedestrian around the electric bicycle 10 to perceive (for example, visualize).

### <Effects of Third Modification>

As described above, the electric bicycle 10 of the third modification is switchable in the EAB traveling mode, the EV traveling mode, and the EV low-speed traveling mode. Accordingly, the electric bicycle 10 can travel in an appropriate traveling mode (that is, an appropriate driving state and maximum speed).

The control device 40 causes the front notification lamp 90a and the rear notification lamp 90b to perform the notification of the first manner when the electric bicycle 10 is in the EAB traveling mode, causes the front notification lamp 90a and the rear notification lamp 90b to perform the notification of the second manner when the electric bicycle 10 is in the EV traveling mode, and causes the front notification lamp 90a and the rear notification lamp 90b to perform the notification of the third manner when the electric bicycle 10 is in the EV low-speed traveling mode. Accordingly, it is possible to clearly notify the outside of the electric bicycle 10 whether the electric bicycle 10 is in the EAB traveling mode, the EV traveling mode, or the EV low-speed traveling mode according to a difference in modes of the notification performed by the front notification lamp 90a and the rear notification lamp 90b.

In the example described here, three traveling modes, that is, the EAB traveling mode, the EV traveling mode, and the EV low-speed traveling mode can be switched, but the present invention is not limited thereto. For example, in addition to the three traveling modes, the electric bicycle 10 may be switchable to a non-electric traveling mode in which a wheel (for example, the rear wheel 78) is driven by a force alone that is input to an input unit (for example, the crank pedal 79) receiving an input of a force from a leg of a rider. Here, the non-electric traveling mode may be, for example, a traveling mode in which driving of the motor M is uniformly prohibited regardless of a vehicle speed, an age of a driver, a type of a travel path, and the like.

In a case where such a non-electric traveling mode is provided, for example, the electric bicycle 10 is provided with an operation switch for entering the non-electric traveling mode. In a case where an operation to enter the non-electric traveling mode is received via the operation switch, the control device 40 takes the electric bicycle 10 into the non-electric traveling mode and does not perform switching to another traveling mode. On the other hand, in a case where there is no operation to enter the non-electric traveling mode, as described above, the control device 40 appropriately switches the traveling mode of the electric bicycle 10 in the EAB traveling mode, the EV traveling mode, and the EV low-speed traveling mode, and does not perform switching to the non-electric traveling mode.

### <Fourth Modification>

Next, a fourth modification will be described. The fourth modification to be described below is different from the above third modification in that the present invention is applied to a so-called motorized bicycle (hereinafter, also referred to as an electric vehicle). In the following description of the fourth modification, parts different from those of the above embodiment and third modification will be mainly described, and parts similar to those of the above embodiment and third modification will be denoted by the same reference numerals and the description thereof will be appropriately omitted.

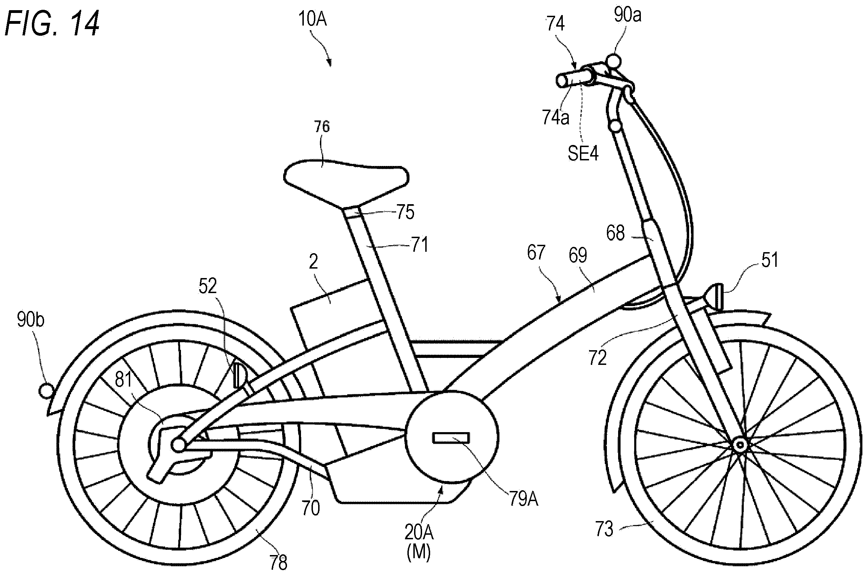

As shown in FIG. 14, an electric vehicle 10A of the fourth modification includes a pair of footrest portions 79A on which feet of a driver are placed, instead of the crank pedal 79, on left and right sides of a vehicle body. The electric vehicle 10A of the fourth modification includes a drive unit 20A that generates power using electric power supplied from the battery 2, instead of the electric assist unit 20. The drive unit 20A is obtained by, for example, removing, from the electric assist unit 20, a power transmission mechanism for driving the rear wheel 78 by a force input to the crank pedal 79, and includes the motor M driven based on an operation on the accelerator grip 74a, the control device 40, and the like. Unlike the electric bicycle 10 in the above embodiment and modifications up to the third modification, the electric vehicle 10A does not receive an input of a force from legs of a rider (the driver).

Also in the electric vehicle 10A of the fourth modification, similarly to the electric bicycle 10 of the above embodiment, a torque in a forward rotation direction output from the motor M of the drive unit 20A is transmitted to the rear wheel 78, and is used for the driving of the rear wheel 78 (that is, traveling of the electric vehicle 10A). In an example shown in FIG. 14, the battery 2 is disposed below the seat 76 and at a rear portion of the seat post 71, but the present invention is not limited thereto, and for example, the battery 2 may be disposed below the seat 76 and at a front portion of the seat post 71 as in the above embodiment and the like.

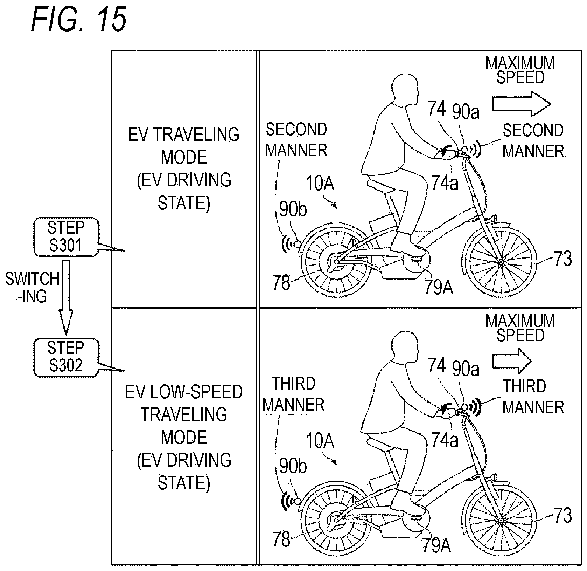

As shown in FIG. 15, the electric vehicle 10A of the fourth modification is switchable between an EV traveling mode and an EV low-speed traveling mode. In the fourth modification, for example, the control device 40 performs traveling in the EV traveling mode when a travel path of the electric vehicle 10A is a vehicle lane, and performs traveling in the EV low-speed traveling mode when the travel path is a pedestrian lane. The control device 40 may perform the traveling in the EV traveling mode when an age of a driver is equal to or greater than a predetermined age (for example, 16 years old), and may perform the traveling in the EV low-speed traveling mode when the age of the driver is less than the predetermined age. Further, the control device 40 may perform the traveling in the EV traveling mode when a driver has a license for traveling in the EV traveling mode, and may perform the traveling in the EV low-speed traveling mode when the driver does not have the license for traveling in the EV traveling mode.

Further, in the fourth modification, as in the above third modification (for example, an example shown in FIG. 13), the control device 40 notifies of the EV traveling mode toward an outside of the electric vehicle 10A, by causing the front notification lamp 90a and the rear notification lamp 90b to perform a notification of a second manner when the electric vehicle 10A is in the EV traveling mode. When the electric vehicle 10A is in the EV low-speed traveling mode, the control device 40 notifies of the EV low-speed traveling mode toward the outside of the electric vehicle 10A, by causing the front notification lamp 90a and the rear notification lamp 90b to perform a notification of a third manner.

As described above, it is assumed that the electric vehicle 10A travels on the vehicle lane in the EV traveling mode and travels on the pedestrian lane in the EV low-speed traveling mode. In this case, when the electric vehicle 10A traveling on the vehicle lane enters the pedestrian lane (that is, when a type of the travel path is changed from the vehicle lane to the pedestrian lane), the control device 40 switches a traveling mode of the electric vehicle 10A from the EV traveling mode to the EV low-speed traveling mode as indicated by speech-balloons in step S301 and step S302 and a hollow arrow interposed therebetween in FIG. 15. At this time, the control device 40 switches a notification performed by the front notification lamp 90a and the rear notification lamp 90b from the notification of the second manner to the notification of the third manner.

That is, in the fourth modification, the control device 40 can perform a notification method for notifying of the traveling mode of the electric vehicle 10A toward the outside of the electric vehicle 10A, the notification method including a step (for example, see step S301) of performing the notification of the second manner in the EV traveling mode in which the rear wheel 78 is driven by power of the motor M with a maximum speed of 15 [km/h] as an upper limit, and a step (for example, see step S302) of performing, after switching from the EV traveling mode to the EV low-speed traveling mode in which the rear wheel 78 is driven by the power of the motor M with a maximum speed of 10 [km/h] as an upper limit, the notification of the third manner different from the second manner in the EV low-speed traveling mode. Accordingly, it is possible to notify of the traveling mode of the electric vehicle 10A toward the outside of the electric vehicle 10A.

### <Effects of Fourth Modification>

As described above, the electric vehicle 10A of the fourth modification is switchable between the EV traveling mode and the EV low-speed traveling mode. Accordingly, the electric vehicle 10A can travel in an appropriate traveling mode.

The control device 40 causes the front notification lamp 90a and the rear notification lamp 90b to perform the notification of the second manner when the electric vehicle 10A is in the EV traveling mode, and causes the front notification lamp 90a and the rear notification lamp 90b to perform the notification of the third manner when the electric vehicle 10A is in the EV low-speed traveling mode. Accordingly, it is possible to clearly notify the outside of the electric vehicle 10A whether the electric vehicle 10A is in the EV traveling mode or the EV low-speed traveling mode according to a difference in modes of the notification performed by the front notification lamp 90a and the rear notification lamp 90b.

As described above, it is assumed that the electric vehicle 10A travels on the pedestrian lane in the EV low-speed traveling mode and travels on the vehicle lane (that is, a travel path other than the pedestrian lane) in the EV traveling mode. In this case, a notification device of the present modification implemented by the front notification lamp 90a, the rear notification lamp 90b, and the control device 40 can be said to perform the notification of the third manner when the travel path information acquisition unit 420 acquires that the electric vehicle 10A is traveling on the pedestrian lane (for example, see step S302). The notification device of the present modification can be said to perform the notification of the second manner different from the third manner when the travel path information acquisition unit 420 acquires that the electric vehicle 10A is not traveling on the pedestrian lane or acquires that the electric vehicle 10A is traveling on the travel path other than the pedestrian lane (for example, the vehicle lane) (for example, see step S301). Accordingly, a traffic participant around the electric vehicle 10A can determine whether the electric vehicle 10A is traveling on the pedestrian lane in the EV low-speed traveling mode or traveling on the travel path other than the pedestrian lane in the EV traveling mode based on modes of the notification of the electric vehicle 10A, and can easily determine whether the electric vehicle 10A is appropriately traveling according to the type of the travel path. Therefore, it is possible to further enhance an awareness of the driver (that is, the rider) that causes the electric vehicle 10A to travel appropriately according to the type of the travel path (more specifically, to travel in an appropriate traveling mode according to the type of the travel path), and the electric vehicle 10A can travel in the appropriate traveling mode according to the type of the travel path.

Further, the notification device of the present modification can also be said to perform the notification of the second manner when the travel path information acquisition unit 420 acquires that the electric vehicle 10A is traveling on the vehicle lane (for example, see step S301). The notification device of the present modification can also be said to perform the notification of the third manner different from the second manner when the travel path information acquisition unit 420 acquires that the electric vehicle 10A is not traveling on the vehicle lane or acquires that the electric vehicle 10A is traveling on a travel path other than the vehicle lane (for example, the pedestrian lane) (for example, see step S302). Accordingly, the traffic participant around the electric vehicle 10A can determine whether the electric vehicle 10A is traveling on the vehicle lane in the EV traveling mode or traveling on the travel path other than the vehicle lane in the EV low-speed traveling mode based on the modes of the notification of the electric vehicle 10A, and can easily determine whether the electric vehicle 10A is appropriately traveling according to the type of the travel path. Therefore, it is possible to further enhance an awareness of the driver (that is, the rider) that causes the electric vehicle 10A to travel appropriately according to the type of the travel path (more specifically, to travel in an appropriate traveling mode according to the type of the travel path), and the electric vehicle 10A can travel in the appropriate traveling mode according to the type of the travel path.

### <Fifth Modification>

Next, a fifth modification will be described. The fifth modification to be described below is different from the above embodiment in which the present invention is applied to a bicycle in that the present invention is applied to a stand-up type vehicle such as a scooter on which a driver rides on (drives) a vehicle in a standing state. In the following description of the fifth modification, parts different from those of the above embodiment will be mainly described, and parts similar to those of the above embodiment will be denoted by the same reference numerals and the description thereof will be appropriately omitted. In the fifth modification and a sixth modification to be described below, "EAB" is, for example, an abbreviation of "electric-assisted board".

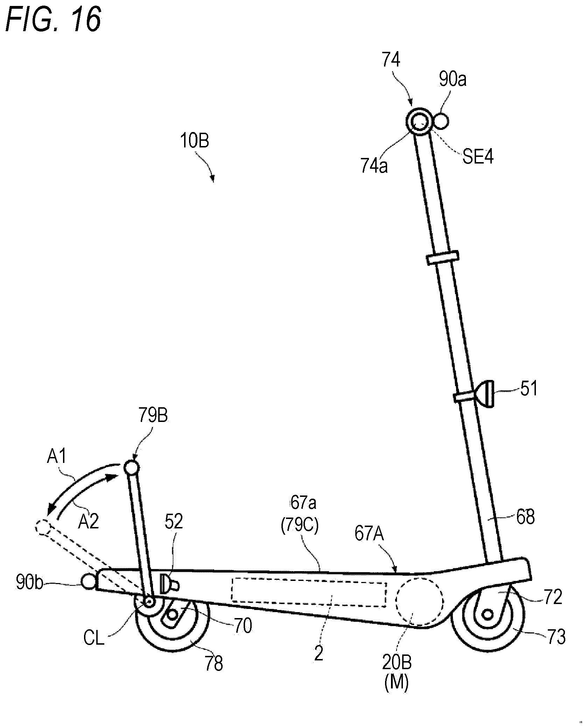

As shown in FIG. 16, a stand-up type vehicle 10B of the fifth modification includes the front wheel 73, the rear wheel 78, a base portion 67A, a kick pedal 79B that is pivotally supported in a front-rear direction with respect to the base portion 67A about an axis CL extending in a left-right direction of a vehicle body, the battery 2, and a drive unit 20B that generates power by electric power supplied from the battery 2.

The base portion 67A has substantially the same height as upper end portions of the front wheel 73 and the rear wheel 78, and is formed in a substantially plate shape (board shape) extending substantially horizontally from above the front wheel 73 toward above the rear wheel 78. In the base portion 67A, a footrest portion 79C on which feet of a driver are placed is provided at a position between the front wheel 73 and the rear wheel 78.

More specifically, the base portion 67A includes a pair of left and right horizontal frames (not shown) extending substantially horizontally from the front to the rear of the vehicle body at substantially the same height as the upper end portions of the front wheel 73 and the rear wheel 78, a horizontal plane 67a provided substantially horizontally so as to extend from an upper portion of one of the pair of left and right horizontal frames to an upper portion of the other, the head pipe 68 extending upward from a substantially front end portion of the horizontal plane 67a, and the pair of left and right rear forks 70 extending from the pair of left and right horizontal frames toward a center of the rear wheel 78.

The horizontal plane 67a constitutes an upper surface of the base portion 67A, and functions as a placement surface on which the feet of the driver can be placed. At least a part of the horizontal plane 67a is provided as the above footrest portion 79C. In the base portion 67A, the battery 2 and the drive unit 20B are provided below the footrest portion 79C.

A force (a stepping force) from a leg of the driver is input to the kick pedal 79B. The kick pedal 79B pivots rearward as indicated by an arrow A1 when the stepping force is input (that is, when the kick pedal 79B is depressed by the driver). The stepping force input to the kick pedal 79B in this way is transmitted to the rear wheel 78 via a power transmission mechanism (not shown) to drive the rear wheel 78. On the other hand, when the driver stops depressing on the kick pedal 79B (that is, when the stepping force input to the kick pedal 79B is set to 0), the kick pedal 79B pivots forward as indicated by an arrow A2 using a biasing force of a spring or the like (not shown), and returns to a predetermined initial position (for example, a position indicated by a solid line in FIG. 16). However, power that may be generated when the kick pedal 79B pivots forward is not transmitted to the rear wheel 78 by a one-way clutch (not shown) or the like.

The drive unit 20B includes, for example, the motor M that generates the power by the electric power supplied from the battery 2, the power transmission mechanism (not shown) that transmits the power of the motor M to the rear wheel 78, and the control device 40. That is, the power of the motor M of the drive unit 20B is transmitted to the rear wheel 78 via the power transmission mechanism to drive the rear wheel 78. In the example described here, the drive unit 20B including the motor M is provided in the base portion 67A, but the present invention is not limited thereto. For example, the motor M may be an in-wheel motor for the rear wheel 78.

The stand-up type vehicle 10B is provided with the torque sensor SE2 (not shown in FIG. 16) that acquires a torque value Tq generated by a force (a stepping force) with which the driver steps on the kick pedal 79B.

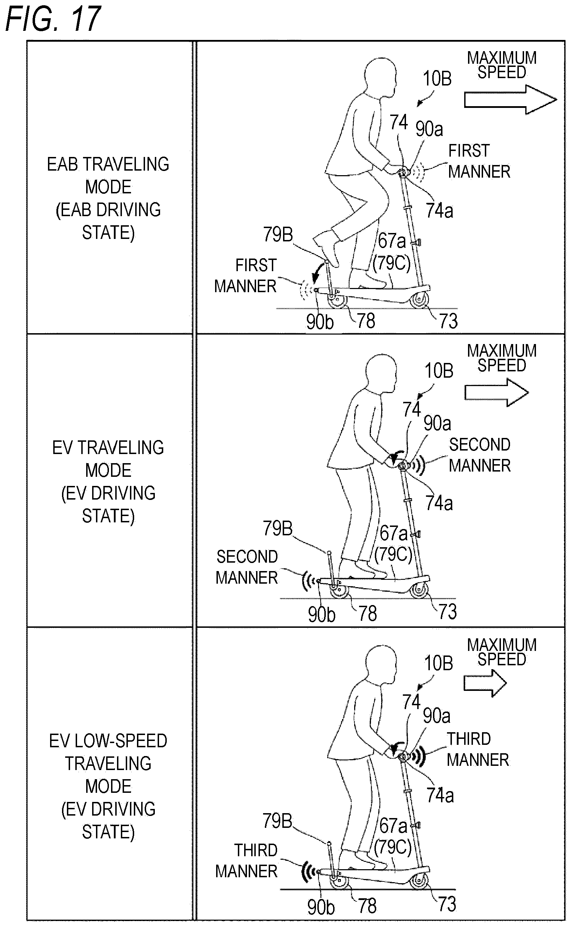

As shown in FIG. 17, the stand-up type vehicle 10B of the fifth modification is switchable between an EAB traveling mode for traveling in an EAB driving state in which the rear wheel 78 is driven by at least the force (that is, the stepping force) input to the kick pedal 79B, and an EV traveling mode for traveling in an EV driving state in which the rear wheel 78 is driven by the power of the motor M alone.

Similarly to the EAB traveling mode of the above embodiment, the EAB traveling mode of the fifth modification is also a high-speed electric traveling mode in which the rear wheel 78 is driven by the power of the motor M with a maximum speed of 24 [km/h] as an upper limit, for example. Similarly to the EV traveling mode of the above embodiment, the EV traveling mode of the fifth modification is also an electric traveling mode (a medium-speed electric traveling mode) in which the rear wheel 78 is driven by the power of the motor M with a maximum speed of 15 [km/h] as an upper limit.

Further, similarly to the electric bicycle 10 of the third modification, for example, the stand-up type vehicle 10B of the fifth modification is also switchable to an EV low-speed traveling mode, which is a low-speed electric traveling mode for traveling by driving the rear wheel 78 using the power of the motor M in the EV driving state with a maximum speed of 10 [km/h] as an upper limit.

When the stand-up type vehicle 10B is in the EAB traveling mode, the driver repeats a depressing operation on the kick pedal 79B. Every time the driver steps on the kick pedal 79B, the stepping force is transmitted to the rear wheel 78 to drive the rear wheel 78. Accordingly, the stand-up type vehicle 10B travels. When the stand-up type vehicle 10B is in the EAB traveling mode, the control device 40 causes the motor M to output predetermined power (an assist force) corresponding to the force (the stepping force) with which the driver steps on the kick pedal 79B and a vehicle speed. The power output from the motor M in this way is also transmitted to the rear wheel 78, and is used for the traveling of the stand-up type vehicle 10B.

When the stand-up type vehicle 10B is in the EV traveling mode and the EV low-speed traveling mode, the control device 40 drives the motor M based on an operation on the accelerator grip 74a, and drives the rear wheel 78 by the power of the motor M, thereby causing the stand-up type vehicle 10B to travel.

In the fifth modification, for example, the control device 40 performs switching from the EAB traveling mode to the EV traveling mode or the EV low-speed traveling mode based on the operation on the accelerator grip 74a as in the above third modification. At the time of performing the switching from the EAB traveling mode to the EV traveling mode or the EV low-speed traveling mode, the control device 40 may determine whether to switch to the EV traveling mode or the EV low-speed traveling mode based on an age of a driver, a type of a travel path, and the like.

For example, the control device 40 performs the switching to the EV traveling mode when a travel path of the stand-up type vehicle 10B is a vehicle lane, and performs the switching to the EV low-speed traveling mode when the travel path of the stand-up type vehicle 10B is a pedestrian lane. The control device 40 may perform the switching to the EV traveling mode when an age of a driver is equal to or greater than a predetermined age (for example, 16 years old), and may perform the switching to the EV low-speed traveling mode when the age of the driver is less than the predetermined age. Further, the control device 40 may perform the switching to the EV traveling mode when a driver has a license for traveling in the EV traveling mode, and may perform the switching to the EV low-speed traveling mode when the driver does not have the license for traveling in the EV traveling mode.

Further, in the fifth modification, the control device 40 notifies of a traveling mode of the stand-up type vehicle 10B toward an outside, by the front notification lamp 90a and the rear notification lamp 90b, as in the above third modification (for example, the example shown in FIG. 13). For example, when the stand-up type vehicle 10B is in the EAB traveling mode, the control device 40 notifies of the EAB traveling mode toward the outside of the stand-up type vehicle 10B, by causing the front notification lamp 90a and the rear notification lamp 90b to perform a notification of a first manner. When the stand-up type vehicle 10B is in the EV traveling mode, the control device 40 notifies of the EV traveling mode toward the outside of the stand-up type vehicle 10B, by causing the front notification lamp 90a and the rear notification lamp 90b to perform a notification of a second manner. When the stand-up type vehicle 10B is in the EV low-speed traveling mode, the control device 40 notifies of the EV low-speed traveling mode toward the outside of the stand-up type vehicle 10B, by causing the front notification lamp 90a and the rear notification lamp 90b to perform a notification of a third manner.

### <Effects of Fifth Modification>

As described above, the stand-up type vehicle 10B of the fifth modification is switchable in the EAB traveling mode, the EV traveling mode, and the EV low-speed traveling mode. Accordingly, the stand-up type vehicle 10B can travel in an appropriate traveling mode (that is, an appropriate driving state and maximum speed).

The control device 40 causes the front notification lamp 90a and the rear notification lamp 90b to perform the notification of the first manner when the stand-up type vehicle 10B is in the EAB traveling mode, causes the front notification lamp 90a and the rear notification lamp 90b to perform the notification of the second manner when the stand-up type vehicle 10B is in the EV traveling mode, and causes the front notification lamp 90a and the rear notification lamp 90b to perform the notification of the third manner when the stand-up type vehicle 10B is in the EV low-speed traveling mode. Accordingly, it is possible to clearly notify the outside of the stand-up type vehicle 10B whether the stand-up type vehicle 10B is in the EAB traveling mode, the EV traveling mode, or the EV low-speed traveling mode according to a difference in modes of the notification performed by the front notification lamp 90a and the rear notification lamp 90b.

The stand-up type vehicle 10B may also be further switchable to the above non-electric traveling mode.

### <Sixth Modification>

Next, a sixth modification will be described. The sixth modification to be described below is different from the above fifth modification in that the footrest portion 79C is an input unit to which a force (a stepping force) from a leg of a driver is input. In the following description of the sixth modification, parts different from those of the above embodiment and fifth modification will be mainly described, and parts similar to those of the above embodiment and fifth modification will be denoted by the same reference numerals and the description thereof will be appropriately omitted.

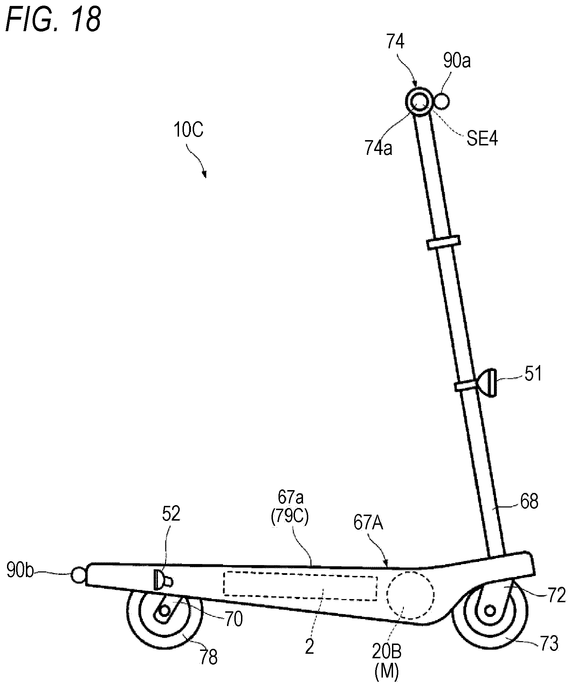

As shown in FIG. 18, in a stand-up type vehicle 10C of the sixth modification, the above kick pedal 79B is not provided, and the footrest portion 79C which is provided between the front wheel 73 and the rear wheel 78 and on which a foot of the driver is placed serves as the input unit to which the force (the stepping force) from the leg of the driver is input, instead of the kick pedal 79B.

More specifically, the driver kicks the ground with a dominant foot in a state in which a foot (for example, a left foot) that is not the dominant foot is placed on the footrest portion 79C, and inputs a reaction force of a force of kicking the ground to the footrest portion 79C to cause the stand-up type vehicle 10C to travel. That is, the footrest portion 79C functions as an input unit that receives the input of the reaction force of the force of kicking the ground by the leg of the driver. The stand-up type vehicle 10C is provided with, for example, a sensor (not shown) that acquires the reaction force (the stepping force) input to the footrest portion 79C by the driver, instead of the torque sensor SE2.

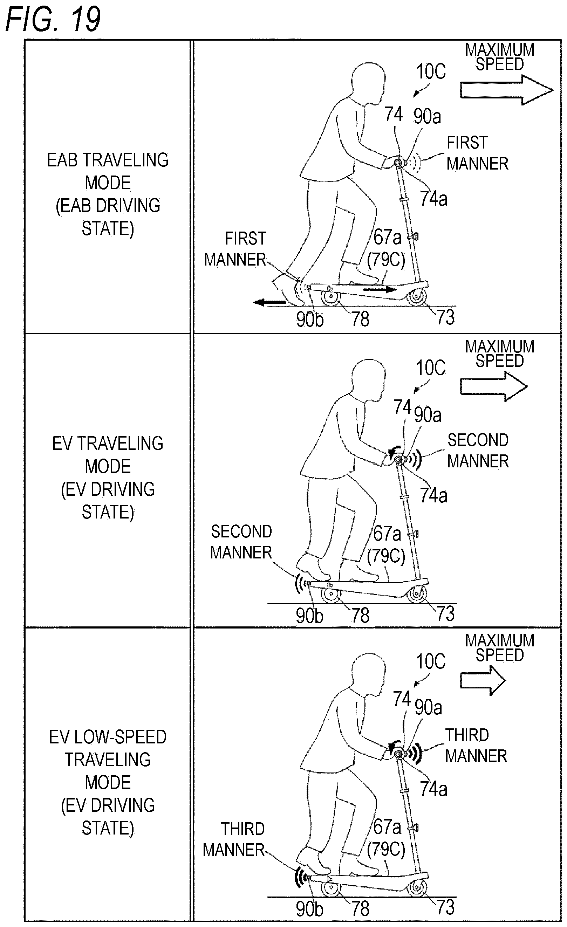

As shown in FIG. 19, the stand-up type vehicle 10C of the sixth modification is switchable in an EAB traveling mode, an EV traveling mode, and an EV low-speed traveling mode, similarly to the stand-up type vehicle 10B of the fifth modification.

When the stand-up type vehicle 10C is in the EAB traveling mode, for example, in a state in which the stand-up type vehicle 10C is stopped, the driver places the foot (for example, the left foot) that is not the dominant foot on the footrest portion 79C, and kicks the ground with the dominant foot for assistance so as to cause the stand-up type vehicle 10C to travel. When a vehicle speed decreases, the driver kicks the ground again with the dominant foot for assistance so as to re-accelerate the stand-up type vehicle 10C. When the stand-up type vehicle 10C is in the EAB traveling mode, the control device 40 causes the motor M to output predetermined power (an assist force) corresponding to the reaction force (the stepping force) input to the footrest portion 79C by the driver and the vehicle speed. The power output from the motor M in this way is also transmitted to the rear wheel 78, and is used for the traveling of the stand-up type vehicle 10C.

When the stand-up type vehicle 10C is in the EV traveling mode and the EV low-speed traveling mode, the control device 40 drives the motor M based on an operation on the accelerator grip 74a, and drives the rear wheel 78 by the power of the motor M, thereby causing the stand-up type vehicle 10C to travel, as in the above fifth modification.

In the sixth modification, for example, the control device 40 performs switching from the EAB traveling mode to the EV traveling mode or the EV low-speed traveling mode based on the operation on the accelerator grip 74a as in the above third modification and fifth modification. At the time of performing the switching from the EAB traveling mode to the EV traveling mode or the EV low-speed traveling mode, the control device 40 may determine whether to switch to the EV traveling mode or the EV low-speed traveling mode based on an age of a driver, a type of a travel path, and the like.

Further, in the sixth modification, the control device 40 notifies of a traveling mode of the stand-up type vehicle 10C toward an outside, using the front notification lamp 90a and the rear notification lamp 90b, as in the above third modification (for example, the example shown in FIG. 13) and fifth modification. For example, when the stand-up type vehicle 10C is in the EAB traveling mode, the control device 40 notifies of the EAB traveling mode toward the outside of the stand-up type vehicle 10C, by causing the front notification lamp 90a and the rear notification lamp 90b to perform a notification of a first manner. When the stand-up type vehicle 10C is in the EV traveling mode, the control device 40 notifies of the EV traveling mode toward the outside of the stand-up type vehicle 10C, by causing the front notification lamp 90a and the rear notification lamp 90b to perform a notification of a second manner. When the stand-up type vehicle 10C is in the EV low-speed traveling mode, the control device 40 notifies of the EV low-speed traveling mode toward the outside of the stand-up type vehicle 10C, by causing the front notification lamp 90a and the rear notification lamp 90b to perform a notification of a third manner.

### <Effects of Sixth Modification>

As described above, the stand-up type vehicle 10C of the sixth modification is switchable in the EAB traveling mode, the EV traveling mode, and the EV low-speed traveling mode. Accordingly, the stand-up type vehicle 10C can travel in an appropriate traveling mode.

The control device 40 causes the front notification lamp 90a and the rear notification lamp 90b to perform the notification of the first manner when the stand-up type vehicle 10C is in the EAB traveling mode, causes the front notification lamp 90a and the rear notification lamp 90b to perform the notification of the second manner when the stand-up type vehicle 10C is in the EV traveling mode, and causes the front notification lamp 90a and the rear notification lamp 90b to perform the notification of the third manner when the stand-up type vehicle 10C is in the EV low-speed traveling mode. Accordingly, it is possible to clearly notify the outside of the stand-up type vehicle 10C whether the stand-up type vehicle 10C is in the EAB traveling mode, the EV traveling mode, or the EV low-speed traveling mode according to a difference in modes of the notification performed by the front notification lamp 90a and the rear notification lamp 90b.

The stand-up type vehicle 10C may also be further switchable to the above non-electric traveling mode.

### <Seventh Modification>

Next, a seventh modification will be described. The seventh modification to be described below is different from the above sixth modification in that an EAB traveling mode (that is, an EAB driving state) is eliminated as in the above fourth modification. In the following description of the seventh modification, parts different from those of the above embodiment and sixth modification will be mainly described, and parts similar to those of the above embodiment and sixth modification will be denoted by the same reference numerals and the description thereof will be appropriately omitted.

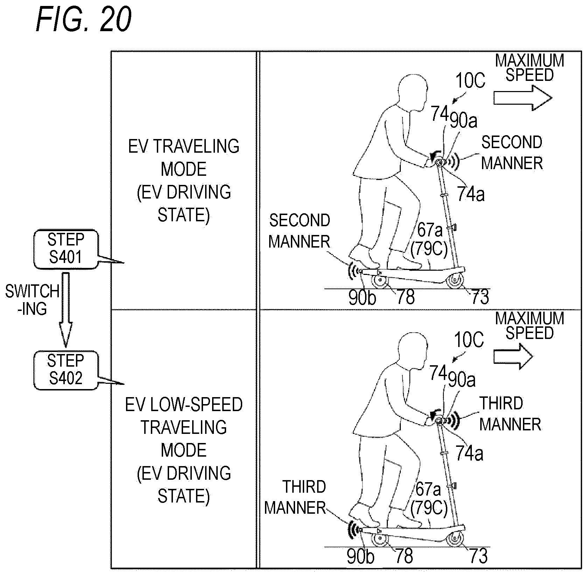

As shown in FIG. 20, the stand-up type vehicle 10C of the seventh modification is switchable between an EV traveling mode and an EV low-speed traveling mode as in the above fourth modification. In the seventh modification, for example, the control device 40 performs traveling in the EV traveling mode when a travel path of the stand-up type vehicle 10C is a vehicle lane, and performs traveling in the EV low-speed traveling mode when the travel path is a pedestrian lane, as in the above fourth modification. The control device 40 may perform the traveling in the EV traveling mode when an age of a driver is equal to or greater than a predetermined age (for example, 16 years old), and may perform the traveling in the EV low-speed traveling mode when the age of the driver is less than the predetermined age. Further, the control device 40 may perform the traveling in the EV traveling mode when a driver has a license for traveling in the EV traveling mode, and may perform the traveling in the EV low-speed traveling mode when the driver does not have the license for traveling in the EV traveling mode.

Further, in the seventh modification, as in the above sixth modification, the control device 40 notifies of the EV traveling mode toward an outside of the stand-up type vehicle 10C, by causing the front notification lamp 90a and the rear notification lamp 90b to perform a notification of the second manner when the stand-up type vehicle 10C is in the EV traveling mode. When the stand-up type vehicle 10C is in the EV low-speed traveling mode, the control device 40 notifies of the EV low-speed traveling mode toward the outside of the stand-up type vehicle 10C, by causing the front notification lamp 90a and the rear notification lamp 90b to perform a notification of the third manner.

As described above, it is assumed that the stand-up type vehicle 10C travels on the vehicle lane in the EV traveling mode and travels on the pedestrian lane in the EV low-speed traveling mode. In this case, when the stand-up type vehicle 10C traveling on the vehicle lane enters the pedestrian lane (that is, when a type of the travel path is changed from the vehicle lane to the pedestrian lane), the control device 40 switches a traveling mode of the stand-up type vehicle 10C from the EV traveling mode to the EV low-speed traveling mode as indicated by speech-balloons in step S401 and step S402 and a hollow arrow interposed therebetween in FIG. 20. At this time, the control device 40 switches a notification performed by the front notification lamp 90a and the rear notification lamp 90b from the notification of the second manner to the notification of the third manner.

That is, in the seventh modification, the control device 40 can perform a notification method for notifying of the traveling mode of the stand-up type vehicle 10C toward the outside of the stand-up type vehicle 10C, the notification method including a step (for example, see step S401) of performing the notification of the second manner in the EV traveling mode in which the rear wheel 78 is driven by power of the motor M with a maximum speed of 15 [km/h] as an upper limit, and a step (for example, see step S402) of performing, after switching from the EV traveling mode to the EV low-speed traveling mode in which the rear wheel 78 is driven by the power of the motor M with a maximum speed of 10 [km/h] as an upper limit, the notification of the third manner different from the second manner in the EV low-speed traveling mode. Accordingly, it is possible to notify of the traveling mode of the stand-up type vehicle 10C toward the outside of the stand-up type vehicle 10C.

### <Effects of Seventh Modification>

As described above, the stand-up type vehicle 10C of the seventh modification is switchable between the EV traveling mode and the EV low-speed traveling mode. Accordingly, the stand-up type vehicle 10C can travel in an appropriate traveling mode.

The control device 40 causes the front notification lamp 90a and the rear notification lamp 90b to perform the notification of the second manner when the stand-up type vehicle 10C is in the EV traveling mode, and causes the front notification lamp 90a and the rear notification lamp 90b to perform the notification of the third manner when the stand-up type vehicle 10C is in the EV low-speed traveling mode. Accordingly, it is possible to clearly notify the outside of the stand-up type vehicle 10C whether the stand-up type vehicle 10C is in the EV traveling mode or the EV low-speed traveling mode according to a difference in modes of the notification performed by the front notification lamp 90a and the rear notification lamp 90b.

As described above, it is assumed that the stand-up type vehicle 10C travels on the pedestrian lane in the EV low-speed traveling mode and travels on the vehicle lane (that is, a travel path other than the pedestrian lane) in the EV traveling mode. In this case, a notification device of the present modification implemented by the front notification lamp 90a, the rear notification lamp 90b, and the control device 40 can be said to perform the notification of the third manner when the travel path information acquisition unit 420 acquires that the stand-up type vehicle 10C is traveling on the pedestrian lane (for example, see step S402). The notification device of the present modification can be said to perform the notification of the second manner different from the third manner when the travel path information acquisition unit 420 acquires that the stand-up type vehicle 10C is not traveling on the pedestrian lane or acquires that the stand-up type vehicle 10C is traveling on the travel path other than the pedestrian lane (for example, the vehicle lane) (for example, see step S401). Accordingly, a traffic participant around the stand-up type vehicle 10C can determine whether the stand-up type vehicle 10C is traveling on the pedestrian lane in the EV low-speed traveling mode or traveling on the travel path other than the pedestrian lane in the EV traveling mode based on modes of the notification of the stand-up type vehicle 10C, and can easily determine whether the stand-up type vehicle 10C is appropriately traveling according to the type of the travel path. Therefore, it is possible to further enhance an awareness of a driver (that is, a rider) that causes the stand-up type vehicle 10C to travel appropriately according to the type of the travel path (more specifically, to travel in an appropriate traveling mode according to the type of the travel path), and the stand-up type vehicle 10C can travel in the appropriate traveling mode according to the type of the travel path.

Further, the notification device of the present modification can also be said to perform the notification of the second manner when the travel path information acquisition unit 420 acquires that the stand-up type vehicle 10C is traveling on the vehicle lane (for example, see step S401). The notification device of the present modification can also be said to perform the notification of the third manner different from the second manner when the travel path information acquisition unit 420 acquires that the stand-up type vehicle 10C is not traveling on the vehicle lane or acquires that the stand-up type vehicle 10C is traveling on a travel path other than the vehicle lane (for example, the pedestrian lane) (for example, see step S402). Accordingly, the traffic participant around the stand-up type vehicle 10C can determine whether the stand-up type vehicle 10C is traveling on the vehicle lane in the EV traveling mode or traveling on the travel path other than the vehicle lane in the EV low-speed traveling mode based on the modes of the notification of the stand-up type vehicle 10C, and can easily determine whether the stand-up type vehicle 10C is appropriately traveling according to the type of the travel path. Therefore, it is possible to further enhance an awareness of a driver (that is, a rider) that causes the stand-up type vehicle 10C to travel appropriately according to the type of the travel path (more specifically, to travel in an appropriate traveling mode according to the type of the travel path), and the stand-up type vehicle 10C can travel in the appropriate traveling mode according to the type of the travel path.

The notification method described in the above various embodiments can be implemented by, for example, executing a notification program prepared in advance by a computer (a processor). The notification program is stored in a storage medium readable by a computer, and is executed by being read from the storage medium. In addition, the notification program may be provided in a form stored in a non-transitory storage medium such as a flash memory, or may be provided via a network such as the Internet.

Although the various embodiments have been described above with reference to the drawings, it is needless to say that the present invention is not limited to these examples. It is apparent that those skilled in the art can conceive of various modifications and changes within the scope described in the claims, and it is understood that such modifications and changes naturally fall within the technical scope of the present invention. In addition, the constituent elements in the above various embodiments may be combined as desired without departing from the gist of the invention.

For example, in the above embodiment, the maximum speed of the EAB traveling mode is set to 24 [km/h], the maximum speed of the EV traveling mode is set to 15 [km/h], and the maximum speed of the EV low-speed traveling mode is set to 10 [km/h], but the present invention is not limited thereto. The maximum speed of the EAB traveling mode may be, for example, any numerical value in a range of 21 [km/h] to 23 [km/h], the maximum speed of the EV traveling mode may be, for example, any numerical value in a range of 16 [km/h] to 20 [km/h], and the maximum speed of the EV low-speed traveling mode may be, for example, any numerical value in a range of 6 [km/h] to 9 [km/h].

For example, in the above embodiment, in the electric bicycle 10, each of a wheel driven by the input of the force to the crank pedal 79 and a wheel driven by the power of the motor M is the rear wheel 78, but the present invention is not limited thereto. For example, the wheel driven by the power of the motor M may be the front wheel 73, and the wheel driven by the input of the force to the crank pedal 79 may be the rear wheel 78. The wheel driven by the input of the force to the crank pedal 79 may be the front wheel 73, and the wheel driven by the power of the motor M may be the rear wheel 78.

In the above embodiment and modifications, the notification unit that notifies of the traveling mode (that is, the driving state) of the electric bicycle 10 toward the outside or the like includes the front notification lamp 90a and the rear notification lamp 90b for emitting light that can be perceived by a visual organ which is one of sensory organs, but the present invention is not limited thereto. Instead of or in addition to the front notification lamp 90a and the rear notification lamp 90b, the notification unit that notifies of the traveling mode (that is, the driving state) of the electric bicycle 10 toward the outside or the like may be a display that can display character information, shape information, or the like as perception information, a speaker for emitting a sound that can be perceived by an auditory organ which is one of the sensory organs, or the like.

For example, in a case where the notification unit that performs the notification of the traveling mode is a display, the control device 40 may cause the display to display a message indicating a current traveling mode, such as "traveling in EV traveling mode" when the electric bicycle 10 or the like is in the EV traveling mode. In a case where the notification unit that performs the notification of the traveling mode is a speaker, for example, the control device 40 may output a predetermined sound such as an approach alarm sound from the speaker when the electric bicycle 10 or the like is in the EV traveling mode, and may not output the sound when the electric bicycle 10 or the like is in the EAB traveling mode.

In the above embodiment, the switching to the EAB traveling mode is performed when there is an input to the crank pedal 79 (that is, the operation on the crank pedal 79) in the EV traveling mode, but the present invention is not limited thereto. For example, the switching to the EAB traveling mode may be performed when it is predicted (estimated) that there will be an input to the crank pedal 79 soon in the EV traveling mode.

In the above embodiment, an example in which the electric bicycle 10 is a two-wheeled vehicle including the front wheel 73 and the rear wheel 78 has been described, but the present invention is not limited thereto. The electric bicycle 10 may be a three-wheeled vehicle, a four-wheeled vehicle, or the like other than a two-wheeled vehicle.

A power transmission path from the crank pedal 79 to the wheel driven by the input to the crank pedal 79 and a power transmission path from the motor M to the wheel driven by the power of the motor M may have portions that are parallel to each other.

In a case of starting the electric bicycle 10 or the like in the EV traveling mode, the control device 40 may start the electric bicycle 10 or the like on a condition that it is confirmed that a driver has already ridden on the electric bicycle 10 or the like. Accordingly, it is possible to prevent the electric bicycle 10 or the like from unintentionally flying out in a state in which the driver cannot properly ride on the electric bicycle 10 or the like.

For example, a touch sensor may be provided on the left grip portion of the steering handlebar 74, and when the accelerator grip 74a is operated in a state in which contact with the left grip portion is detected by the touch sensor, the control device 40 may determine that the driver has already ridden on the electric bicycle 10 or the like and start the electric bicycle 10 or the like in the EV traveling mode. In a case where the torque value Tq acquired by the torque sensor SE2 is equal to or greater than a threshold value, the control device 40 may determine that the driver has already ridden on the electric bicycle 10 or the like and start the electric bicycle 10 or the like in the EV traveling mode. Further, in a case where the control device 40 receives ridding completion information from a terminal device (for example, a smartphone) of the driver when a predetermined operation is performed on the terminal device, the control device 40 may determine that the driver has already ridden on the electric bicycle 10 or the like and start the electric bicycle 10 or the like in the EV traveling mode.

From the viewpoint of preventing the electric bicycle 10 or the like from unintentionally flying out, the control device 40 may set the traveling mode to the EAB traveling mode at the time of starting. In the EAB traveling mode, the accelerator grip 74a may be able to accept, for example, an operation other than the operation corresponding to the request for driving the motor M, such as an operation of changing an assist rate.

In the above embodiment, the traveling in the EV traveling mode is enabled in the case where the type of the travel path is the vehicle lane, but the present invention is not limited thereto. For example, the control device 40 may enable the traveling in the EV traveling mode on a condition that there is no pedestrian in front of or around the electric bicycle 10. Whether there is a pedestrian in front of or around the electric bicycle 10 can be determined by, for example, performing image recognition on a landscape image around the electric bicycle 10 captured by a camera or the like included in the electric bicycle 10, a terminal device of a driver, or the like. For example, the control device 40 may determine that the travel path is the pedestrian lane based on the presence of a predetermined number or more of pedestrians in front of or around the electric bicycle 10, and may enable the traveling in the EAB traveling mode.

In the above embodiment, the description has been given using an example of vehicle setting according to Japanese regulations, but it is needless to say that the vehicle setting may be performed according to regulations of countries other than Japan, that is, laws, cabinet orders/ministerial ordinances, treaties, rules, and the like.

In the present description, at least the following matters are described. Although corresponding constituent elements and the like in the above embodiment are shown in parentheses, the present invention is not limited thereto.
(1) A vehicle (electric bicycle 10, stand-up type vehicle 10B, stand-up type vehicle 10C), including:
   an input unit (crank pedal 79, kick pedal 79B, footrest portion 79C) configured to receive an input of a force from a leg of a rider;
   a wheel (rear wheel 78) to which the force input to the input unit is transmitted; and
   an electric motor (motor M) configured to output power to be transmitted to the wheel or another wheel (front wheel 73) different from the wheel, in which
   the vehicle is switchable between a first driving state (EAB driving state) in which the wheel is driven by at least the force input to the input unit, and a second driving state (EV driving state) in which the wheel or the another wheel is driven by the power of the electric motor alone.

   According to (1), the vehicle is switchable between the first driving state in which the wheel is driven by at least the force input to the input unit, and the second driving state in which the wheel or the another wheel is driven by the power of the electric motor alone, and thus the vehicle can travel in an appropriate driving state.
(2) The vehicle according to (1), further including:
   an input acquisition unit (torque sensor SE2, cadence sensor SE5) configured to acquire the input of the force to the input unit, in which
   in the second driving state, when the input acquisition unit acquires the input of the force to the input unit, the vehicle performs switching to the first driving state.

   According to (2), when there is an input of the force to the input unit in the second driving state, the switching to the first driving state can be performed. That is, it is possible to receive a switching operation to the first driving state from the rider using the input unit that receives an operation for driving the wheel in the first driving state. Accordingly, it is possible to perform the switching to the first driving state in response to a request from the rider with a simple configuration that does not require an operation switch or the like for receiving the switching operation to the first driving state separately from the input unit. By switching to the first driving state when there is an input of the force to the input unit in the second driving state, it is possible to distinguish between the first driving state and the second driving state.
(3) The vehicle according to (1) or (2), further including:
   an another input unit (accelerator grip 74a) configured to receive a request for driving the electric motor from the rider, in which
   in the second driving state, the vehicle drives the electric motor based on the request for driving input to the another input unit.

   According to (3), the electric motor is driven based on the request for driving from the rider to the another input unit in the second driving state, and thus the vehicle can travel by the power of the electric motor according to the request from the rider.
(4) The vehicle according to (3), further including:
   an input acquisition unit configured to acquire the input of the force to the input unit, in which
   in the second driving state, when the input acquisition unit acquires the input of the force to the input unit, the vehicle prohibits the electric motor from driving based on the request for driving to the another input unit.

   According to (4), when there is an input of the force to the input unit in the second driving state, the driving of the electric motor based on the request for driving input to the another input unit is prohibited, and thus it is possible to distinguish between the first driving state and the second driving state.
(5) The vehicle according to any one of (1) to (4), in which
   in the first driving state, the vehicle drives the electric motor based on an amount of the force input to the input unit.
   According to (5), the electric motor is driven based on the amount of the force input to the input unit in the first driving state, and thus the vehicle can travel by the input of the force to the input unit and appropriate power of the electric motor according to the input amount.
(6) The vehicle according to (5), further including:
   an another input unit configured to receive a request for driving the electric motor from the rider, in which
   in the second driving state, the vehicle drives the electric motor based on the request for driving input to the another input unit, and
   in the first driving state, the vehicle prohibits the electric motor from driving based on the request for driving input to the another input unit.

   According to (6), the electric motor is driven based on the request for driving input to the another input unit in the second driving state, and the driving of the electric motor based on the request for driving input to the another input unit is prohibited in the first driving state, and thus the vehicle can travel by the appropriate power of the electric motor in each driving state.
(7) The vehicle according to (1), in which
   in the second driving state, a request for driving the electric motor from the rider is acquired based on an amount of the force input to the input unit.
   According to (7), the request for driving the electric motor from the rider is acquired based on the amount of the force input to the input unit in the second driving state, and thus the request for driving the electric motor can be acquired with a simple configuration that does not require the another input unit for receiving the request for driving the electric motor.
(8) The vehicle according to any one of (1) to (7), further including:
   an age acquisition unit (rider information acquisition unit 410) configured to acquire an age of the rider, in which
   the vehicle is switchable between the first driving state and the second driving state based on the age acquired by the age acquisition unit.

   According to (8), the vehicle is switchable between the first driving state and the second driving state based on the age of the rider, and thus the vehicle can travel in an appropriate driving state according to the age of the rider.
(9) The vehicle according to (8), in which
   the vehicle prohibits switching from the first driving state to the second driving state or prohibits driving in the second driving state, in a case where the age acquired by the age acquisition unit is less than a predetermined age, or permits the switching from the first driving state to the second driving state or permits the driving in the second driving state, in a case where the age acquired by the age acquisition unit is equal to or greater than a predetermined age.
   According to (9), it is possible to avoid the vehicle from traveling in the second driving state when a rider with an age less than the predetermined age rides on the vehicle.
(10) The vehicle according to any one of (1) to (9), further including:
   a determination unit (determination unit 431) configured to determine whether the rider has a license for driving the vehicle to travel in the second driving state, in which
   the vehicle is switchable between the first driving state and the second driving state based on a determination result of the determination unit.

   According to (10), the vehicle is switchable between the first driving state and the second driving state based on the determination result as to whether the rider has the license for driving the vehicle to travel in the second driving state, and thus the vehicle can travel in an appropriate driving state according to a possession state of the license of the rider.
(11) The vehicle according to (10), in which
   the vehicle permits switching from the first driving state to the second driving state or permits driving in the second driving state, in a case where the determination unit determines that the rider has the license, or
   the vehicle prohibits the switching from the first driving state to the second driving state or prohibits the driving in the second driving state, in a case where the determination unit determines that the rider does not have the license.

   According to (11), when the rider who has the license for driving the vehicle to travel in the second driving state rides on the vehicle, the vehicle can travel in the second driving state, and the convenience of the rider can be improved.
(12) The vehicle according to any one of (1) to (11), further including:
   a travel path acquisition unit (travel path information acquisition unit 420) configured to acquire a type of a travel path on which the vehicle travels, in which
   the vehicle is switchable between the first driving state and the second driving state based on the type acquired by the travel path acquisition unit.

   According to (12), the vehicle is switchable between the first driving state and the second driving state based on the type of the travel path on which the vehicle travels, and thus the vehicle can travel in an appropriate driving state according to the type of the travel path on which the vehicle travels.
(13) The vehicle according to (12), in which
   the vehicle prohibits switching from the first driving state to the second driving state or prohibits driving in the second driving state, in a case where the type acquired by the travel path acquisition unit is a pedestrian lane on which a pedestrian passes, or
   the vehicle permits the switching from the first driving state to the second driving state or permits the driving in the second driving state, in a case where the type acquired by the travel path acquisition unit is a vehicle lane on which a vehicle travels.

   According to (13), it is possible to avoid the vehicle from traveling in the second driving state when the vehicle is traveling on the pedestrian lane.
(14) The vehicle according to any one of (1) to (13), further including:
   a notification unit (front notification lamp 90a, rear notification lamp 90b) configured to notify that the vehicle is in either driving state of the first driving state and the second driving state, toward an outside of the vehicle.
   According to (14), it is possible to notify whether the vehicle is in the first driving state or the second driving state, toward the outside of the vehicle.
(15) The vehicle according to (14), in which
   the notification unit is provided to be perceivable from a front side and a rear side with respect to the vehicle.
   According to (15), it is possible to notify a traffic participant present in front of or behind the vehicle whether the vehicle is in the first driving state or the second driving state.
(16) The vehicle according to (15), in which
   the notification unit includes a front notification unit (front notification lamp 90a) provided on a front side of the vehicle, and a rear notification unit (rear notification lamp 90b) provided on a rear side of the vehicle with respect to the front notification unit.
   According to (16), the front notification unit can be easily perceived from the front side with respect to the vehicle, and the rear notification unit can be easily perceived from the rear side with respect to the vehicle.
(17) The vehicle according to (15) or (16), in which
   the notification unit is provided to be further perceivable from a lateral side with respect to the vehicle.
   According to (17), it is possible to notify a traffic participant present in the lateral side with respect to the vehicle whether the vehicle is in the first driving state or the second driving state.
(18) The vehicle according to any one of (14) to (17), in which
   the notification unit performs a notification of a first manner in the first driving state, and performs a notification of a second manner, which is different from the first manner, in the second driving state.
   According to (18), it is possible to clearly notify whether the vehicle is in the first driving state or the second driving state according to modes of the notification performed by the notification unit, toward the outside of the vehicle.
(19) The vehicle according to (18), in which
   in the first driving state,
   not only is the wheel driven by the force input to the input unit, the wheel or the another wheel is also driven by the power of the electric motor.

   According to (19), in the first driving state, the vehicle can travel by the force input to the input unit and the power of the electric motor.
(20) The vehicle according to (19), in which
   the vehicle is switchable between a first traveling state (EAB traveling mode) in which the wheel or the another wheel is driven by the power of the electric motor in the first driving state with a first maximum speed as an upper limit, and a second traveling state (EV traveling mode) in which the wheel or the another wheel is driven by the power of the electric motor in the second driving state with a second maximum speed, which is lower than the first maximum speed, as an upper limit.
   According to (20), the vehicle can travel in an appropriate driving state (that is, traveling state) and at the maximum speed.
(21) The vehicle according to (20), in which
   the notification unit performs the notification of the first manner in the first traveling state, and performs the notification of the second manner in the second traveling state.
   According to (21), it is possible to clearly notify whether the vehicle is in the first traveling state or the second traveling state, toward the outside of the vehicle.
(22) The vehicle according to (21), in which
   the vehicle is further switchable to a third traveling state (EV low-speed traveling mode) in which the wheel or the another wheel is driven by the power of the electric motor in the second driving state with a third maximum speed, which is lower than the second maximum speed, as an upper limit.
   According to (22), the vehicle can travel in the appropriate driving state (that is, traveling state) and at the maximum speed.
(23) The vehicle according to (22), in which
   the notification unit performs a notification of a third manner, which is different from the first manner and the second manner, in the third traveling state.
   According to (23), it is possible to clearly notify whether the vehicle is in the first traveling state, the second traveling state, or the third traveling state, toward the outside of the vehicle.
(24) The vehicle according to any one of (1) to (23), in which
   the vehicle is a bicycle (electric bicycle 10) including a front wheel (front wheel 73), a rear wheel (rear wheel 78), and a seating portion (seat 76) on which the rider sits, and
   the input unit is a pedal (crank pedal 79) configured to receive an input of a stepping force from the leg of the rider.

   According to (24), the vehicle, which is the bicycle on which the rider sits and rides, can travel in an appropriate driving state.
(25) The vehicle according to any one of (1) to (23), in which
   the vehicle is a stand-up type vehicle (stand-up type vehicle 10B, 10C) including a front wheel (front wheel 73), a rear wheel (rear wheel 78), and a footrest portion (footrest portion 79C) provided between the front wheel and the rear wheel and configured to allow a foot of the rider to be placed, and
   the input unit is the footrest portion configured to receive an input of a reaction force of a force caused by the leg of the rider kicking the ground.

   According to (25), the vehicle, which is the stand-up type vehicle on which the rider rides in a standing state, can travel in an appropriate driving state.
(26) A notification method for notifying of a driving state of a vehicle (electric bicycle 10, stand-up type vehicle 10B, stand-up type vehicle 10C) toward an outside of the vehicle, the vehicle including
   an input unit (crank pedal 79, kick pedal 79B, footrest portion 79C) configured to receive an input of a force from a leg of a rider,
   a wheel (rear wheel 78) to which the force input to the input unit is transmitted, and
   an electric motor (motor M) configured to output power to be transmitted to the wheel or another wheel (front wheel 73) different from the wheel,
   the notification method including:
      a step (step S 112, step S212) of performing a notification of a first manner in a first driving state (EAB driving state) in which the wheel is driven by at least the force input to the input unit; and
      a step (step S 114, step S214) of performing, after switching from the first driving state to a second driving state (EV driving state) in which the wheel or the another wheel is driven by the power of the electric motor alone, a notification of a second manner different from the first manner in the second driving state.

      According to (26), it is possible to clearly notify whether the vehicle is in the first driving state or the second driving state, toward the outside of the vehicle.
(27) A notification program for notifying of a driving state of a vehicle (electric bicycle 10, stand-up type vehicle 10B, stand-up type vehicle 10C) toward an outside of the vehicle, the vehicle including
   an input unit (crank pedal 79, kick pedal 79B, footrest portion 79C) configured to receive an input of a force from a leg of a rider,
   a wheel (rear wheel 78) to which the force input to the input unit is transmitted, and
   an electric motor (motor M) configured to output power to be transmitted to the wheel or another wheel (front wheel 73) different from the wheel,
   the notification program causing to perform:
      a step (step S 112, step S212) of performing a notification of a first manner in a first driving state (EAB driving state) in which the wheel is driven by at least the force input to the input unit; and
      a step (step S 114, step S214) of performing, after switching from the first driving state to a second driving state (EV driving state) in which the wheel or the another wheel is driven by the power of the electric motor alone, a notification of a second manner, which is different from the first manner, in the second driving state.

      According to (27), it is possible to clearly notify whether the vehicle is in the first driving state or the second driving state, toward the outside of the vehicle.
(28) A vehicle (electric bicycle 10, electric vehicle 10A, stand-up type vehicle 10B, stand-up type vehicle 10C), including:
   an electric motor (motor M) configured to output power to be transmitted to a wheel (rear wheel 78), in which
   the vehicle is switchable between a first traveling state (EV traveling mode) in which the wheel is driven by the power of the electric motor with a first maximum speed as an upper limit, and a second traveling state (EV low-speed traveling mode) in which the wheel is driven by the power of the electric motor with a second maximum speed, which is lower than the first maximum speed, as an upper limit,
   the vehicle further includes a notification unit (front notification lamp 90a, rear notification lamp 90b) configured to notify of a traveling state of the vehicle toward an outside of the vehicle, and
   the notification unit performs a notification of a first manner in the first traveling state, and performs a notification of a second manner, which is different from the first manner, in the second traveling state.

   According to (28), it is possible to clearly notify whether the vehicle is in the first traveling state or the second traveling state, toward the outside of the vehicle.
(29) The vehicle according to any one of (14) to (23) and (28), in which
   the notification unit includes a light emitting unit provided to be visible from an outside of the vehicle.
   According to (29), it is possible to notify a traffic participant around the vehicle in a visually recognizable manner.
(30) The vehicle according to (29), in which
   the light emitting unit is provided to be changeable in at least one of an emission light color, an emission light intensity, a blinking interval, or a flickering interval.
   According to (30), it is possible to notify the traffic participant around the vehicle in the visually recognizable manner.
(31) A notification method for notifying of a traveling state of a vehicle (electric bicycle 10, electric vehicle 10A, stand-up type vehicle 10B, stand-up type vehicle 10C) toward an outside of the vehicle, the vehicle including an electric motor (motor M) configured to output power to be transmitted to a wheel (rear wheel 78),
   the notification method including:
   a step (step S301, step S401) of performing a notification of a first manner in a first traveling state (EV traveling mode) in which the wheel is driven by the power of the electric motor with a first maximum speed as an upper limit; and
   a step (step S302, step S402) of performing, after switching from the first traveling state to a second traveling state (EV low-speed traveling mode) in which the wheel is driven by the power of the electric motor with a second maximum speed, which is lower than the first maximum speed, as an upper limit, a notification of a second manner, which is different from the first manner, in the second traveling state.

   According to (31), it is possible to clearly notify whether the vehicle is in the first traveling state or the second traveling state, toward the outside of the vehicle.
(32) A notification program for notifying of a traveling state of a vehicle (electric bicycle 10, electric vehicle 10A, stand-up type vehicle 10B, stand-up type vehicle 10C) toward an outside of the vehicle, the vehicle including an electric motor (motor M) configured to output power to be transmitted to a wheel (rear wheel 78),
   the notification program causing to perform:
   a step (step S301, step S401) of performing a notification of a first manner in a first traveling state (EV traveling mode) in which the wheel is driven by the power of the electric motor with a first maximum speed as an upper limit; and
   a step (step S302, step S402) of performing, after switching from the first traveling state to a second traveling state (EV low-speed traveling mode) in which the wheel is driven by the power of the electric motor with a second maximum speed, which is lower than the first maximum speed, as an upper limit, a notification of a second manner, which is different from the first manner, in the second traveling state.

   According to (32), it is possible to clearly notify whether the vehicle is in the first traveling state or the second traveling state, toward the outside of the vehicle.
(33) A notification device (control device 40, front notification lamp 90a, rear notification lamp 90b), which is mounted on a vehicle (electric bicycle 10, electric vehicle 10A, stand-up type vehicle 10B, stand-up type vehicle 10C) and notifies toward an outside of the vehicle, the vehicle having an acquisition unit (travel path information acquisition unit 420) configured to acquire a type of a travel path,
   (i) in which the notification device performs:
      a notification of a first manner in a case where the acquisition unit acquires that the vehicle is traveling on a pedestrian lane on which a pedestrian passes; and
      a notification of a second manner, which is different from the first manner, in a case where the acquisition unit acquires that the vehicle is not traveling on the pedestrian lane or acquires that the vehicle is traveling on a travel path other than the pedestrian lane, or
   (ii) the notification device performs:
      a notification of a third manner in a case where the acquisition unit acquires that the vehicle is traveling on a vehicle lane on which a vehicle travels; and
      a notification of a fourth manner, which is different from the third manner, in a case where the acquisition unit acquires that the vehicle is not traveling on the vehicle lane or acquires that the vehicle is traveling on a travel path other than the vehicle lane.

      According to (33), the vehicle can travel in an appropriate driving state.
(34) A notification method for a notification device (control device 40, front notification lamp 90a, rear notification lamp 90b) which is mounted on a vehicle (electric bicycle 10, electric vehicle 10A, stand-up type vehicle 10B, stand-up type vehicle 10C) and notifies toward an outside of the vehicle, the vehicle having an acquisition unit (travel path information acquisition unit 420) configured to acquire a type of a travel path,
   (i) the notification method including:
      a step (step S05: NO) of performing a notification of a first manner in a case where the acquisition unit acquires that the vehicle is traveling on a pedestrian lane on which a pedestrian passes; and
      a step (step S05: YES, step S07) of performing a notification of a second manner, which is different from the first manner, in a case where the acquisition unit acquires that the vehicle is not traveling on the pedestrian lane or acquires that the vehicle is traveling on a travel path other than the pedestrian lane, or
   (ii) the notification method including:
      a step (step S05: YES, step S07) of performing a notification of a third manner in a case where the acquisition unit acquires that the vehicle is traveling on a vehicle lane on which a vehicle travels; and
      a step (step S05: NO) of performing a notification of a fourth manner, which is different from the third manner, in a case where the acquisition unit acquires that the vehicle is not traveling on the vehicle lane or acquires that the vehicle is traveling on a travel path other than the vehicle lane.

      According to (34), the vehicle can travel in an appropriate driving state.
(35) A notification program, for which a notification device (control device 40, front notification lamp 90a, rear notification lamp 90b) is mounted on a vehicle (electric bicycle 10, electric vehicle 10A, stand-up type vehicle 10B, stand-up type vehicle 10C) and notifies toward an outside of the vehicle, the vehicle having an acquisition unit (travel path information acquisition unit 420) configured to acquire a type of a travel path,
   (i) the notification program causing the notification device to perform:
      a step (step S05: NO) of performing a notification of a first manner in a case where the acquisition unit acquires that the vehicle is traveling on a pedestrian lane on which a pedestrian passes; and
      a step (step S05: YES, step S07) of performing a notification of a second manner, which is different from the first manner, in a case where the acquisition unit acquires that the vehicle is not traveling on the pedestrian lane or acquires that the vehicle is traveling on a travel path other than the pedestrian lane, or
   (ii) the notification program causing the notification device to perform:
      a step (step S05: YES, step S07) of performing a notification of a third manner in a case where the acquisition unit acquires that the vehicle is traveling on a vehicle lane on which a vehicle travels; and
      a step (step S05: NO) of performing a notification of a fourth manner, which is different from the third manner, in a case where the acquisition unit acquires that the vehicle is not traveling on the vehicle lane or acquires that the vehicle is traveling on a travel path other than the vehicle lane.

      According to (35), the vehicle can travel in an appropriate driving state.
(36) A storage medium readable by a computer (control device 40), the storage medium storing the notification program according to any one of (27), (32), and (35).

According to (36), the computer can execute the notification program according to any one of (27), (32), and (35).

The present application is based on Japan Patent Application (Patent Application No. 2021-080616) filed on May 11, 2021, and the contents thereof are incorporated herein by reference.

### REFERENCE SIGNS LIST

10: electric bicycle (vehicle)
10A: electric vehicle (vehicle)
10B, 10C: stand-up type vehicle (vehicle)
73: front wheel (another wheel)
74a: accelerator grip (another input unit)
78: rear wheel (wheel)
79: crank pedal (input unit)
79B: kick pedal (input unit)
79C: footrest portion (input unit)
90a: front notification lamp (notification unit)
90b: rear notification lamp (notification unit)
410: rider information acquisition unit (age acquisition unit)
420: travel path information acquisition unit (travel path acquisition unit)
431: determination unit
M: motor (electric motor)
SE2: torque sensor (input acquisition unit)
SE5: cadence sensor (input acquisition unit)

## Claims

1. A vehicle, comprising:
an input unit configured to receive an input of a force from a leg of a rider;
a wheel to which the force input to the input unit is transmitted; and
an electric motor configured to output power to be transmitted to the wheel or another wheel different from the wheel,
wherein the vehicle is switchable between a first driving state in which the wheel is driven by at least the force input to the input unit, and a second driving state in which the wheel or the another wheel is driven by the power of the electric motor alone.

2. The vehicle according to claim 1, further comprising:
an input acquisition unit configured to acquire the input of the force to the input unit,
wherein in the second driving state, when the input acquisition unit acquires the input of the force to the input unit, the vehicle performs switching to the first driving state.

3. The vehicle according to claim 1 or 2, further comprising:
an another input unit configured to receive a request for driving the electric motor from the rider,
wherein in the second driving state, the vehicle drives the electric motor based on the request for driving input to the another input unit.

4. The vehicle according to claim 3, further comprising:
an input acquisition unit configured to acquire the input of the force to the input unit,
wherein in the second driving state, when the input acquisition unit acquires the input of the force to the input unit, the vehicle prohibits the electric motor from driving based on the request for driving input to the another input unit.

5. The vehicle according to any one of claims 1 to 4,
wherein in the first driving state, the vehicle drives the electric motor based on an amount of the force input to the input unit.

6. The vehicle according to claim 5, further comprising:
an another input unit configured to receive a request for driving the electric motor from the rider,
wherein in the second driving state, the vehicle drives the electric motor based on the request for driving input to the another input unit, and
in the first driving state, the vehicle prohibits the electric motor from driving based on the request for driving input to the another input unit.

7. The vehicle according to claim 1,
wherein in the second driving state, a request for driving the electric motor from the rider is acquired based on an amount of the force input to the input unit.

8. The vehicle according to any one of claims 1 to 7, further comprising:
an age acquisition unit configured to acquire an age of the rider,
wherein the vehicle is switchable between the first driving state and the second driving state based on the age acquired by the age acquisition unit.

9. The vehicle according to claim 8,
wherein the vehicle prohibits switching from the first driving state to the second driving state or prohibits driving in the second driving state, in a case where the age acquired by the age acquisition unit is less than a predetermined age, or
the vehicle permits the switching from the first driving state to the second driving state or permits the driving in the second driving state, in a case where the age acquired by the age acquisition unit is equal to or greater than a predetermined age.

10. The vehicle according to any one of claims 1 to 9, further comprising:
a determination unit configured to determine whether the rider has a license for driving the vehicle to travel in the second driving state,
wherein the vehicle is switchable between the first driving state and the second driving state based on a determination result of the determination unit.

11. The vehicle according to claim 10,
wherein the vehicle permits switching from the first driving state to the second driving state or permits driving in the second driving state, in a case where the determination unit determines that the rider has the license, or
the vehicle prohibits the switching from the first driving state to the second driving state or prohibits the driving in the second driving state, in a case where the determination unit determines that the rider does not have the license.

12. The vehicle according to any one of claims 1 to 11, further comprising:
a travel path acquisition unit configured to acquire a type of a travel path on which the vehicle travels,
wherein the vehicle is switchable between the first driving state and the second driving state based on the type acquired by the travel path acquisition unit.

13. The vehicle according to claim 12,
wherein the vehicle prohibits switching from the first driving state to the second driving state or prohibits driving in the second driving state, in a case where the type acquired by the travel path acquisition unit is a pedestrian lane on which a pedestrian passes, or
the vehicle permits the switching from the first driving state to the second driving state or permits the driving in the second driving state, in a case where the type acquired by the travel path acquisition unit is a vehicle lane on which a vehicle travels.

14. The vehicle according to any one of claims 1 to 13, further comprising:
a notification unit configured to notify that the vehicle is in either driving state of the first driving state and the second driving state, toward an outside of the vehicle.

15. The vehicle according to claim 14,
wherein the notification unit is provided to be perceivable from a front side and a rear side with respect to the vehicle.

16. The vehicle according to claim 15,
wherein the notification unit includes a front notification unit provided on a front side of the vehicle, and a rear notification unit provided on a rear side of the vehicle with respect to the front notification unit.

17. The vehicle according to claim 15 or 16,
wherein the notification unit is provided to be further perceivable from a lateral side with respect to the vehicle.

18. The vehicle according to any one of claims 14 to 17,
wherein the notification unit performs a notification of a first manner in the first driving state, and performs a notification of a second manner, which is different from the first manner, in the second driving state.

19. The vehicle according to claim 18,
wherein in the first driving state,
not only is the wheel driven by the force input to the input unit, the wheel or the another wheel is also driven by the power of the electric motor.

20. The vehicle according to claim 19,
wherein the vehicle is switchable between a first traveling state in which the wheel or the another wheel is driven by the power of the electric motor in the first driving state with a first maximum speed as an upper limit, and a second traveling state in which the wheel or the another wheel is driven by the power of the electric motor in the second driving state with a second maximum speed, which is lower than the first maximum speed, as an upper limit.

21. The vehicle according to claim 20,
wherein the notification unit performs the notification of the first manner in the first traveling state, and performs the notification of the second manner in the second traveling state.

22. The vehicle according to claim 21,
wherein the vehicle is further switchable to a third traveling state in which the wheel or the another wheel is driven by the power of the electric motor in the second driving state with a third maximum speed, which is lower than the second maximum speed, as an upper limit.

23. The vehicle according to claim 22,
wherein the notification unit performs a notification of a third manner, which is different from the first manner and the second manner, in the third traveling state.

24. The vehicle according to any one of claims 1 to 23,
wherein the vehicle is a bicycle including a front wheel, a rear wheel, and a seating portion on which the rider sits, and
the input unit is a pedal configured to receive an input of a stepping force from the leg of the rider.

25. The vehicle according to any one of claims 1 to 23,
wherein the vehicle is a stand-up type vehicle including a front wheel, a rear wheel, and a footrest portion provided between the front wheel and the rear wheel and configured to allow a foot of the rider to be placed, and
the input unit is the footrest portion configured to receive an input of a reaction force of a force caused by the leg of the rider kicking the ground.

26. A notification method for notifying of a driving state of a vehicle toward an outside of the vehicle, the vehicle including
an input unit configured to receive an input of a force from a leg of a rider,
a wheel to which the force input to the input unit is transmitted, and
an electric motor configured to output power to be transmitted to the wheel or another wheel different from the wheel,
the notification method comprising:
a step of performing a notification of a first manner in a first driving state in which the wheel is driven by at least the force input to the input unit; and
a step of performing, after switching from the first driving state to a second driving state in which the wheel or the another wheel is driven by the power of the electric motor alone, a notification of a second manner, which is different from the first manner, in the second driving state.

27. A notification program for notifying of a driving state of a vehicle toward an outside of the vehicle, the vehicle including
an input unit configured to receive an input of a force from a leg of a rider,
a wheel to which the force input to the input unit is transmitted, and
an electric motor configured to output power to be transmitted to the wheel or another wheel different from the wheel,
the notification program causing to perform:
a step of performing a notification of a first manner in a first driving state in which the wheel is driven by at least the force input to the input unit; and
a step of performing, after switching from the first driving state to a second driving state in which the wheel or the another wheel is driven by the power of the electric motor alone, a notification of a second manner, which is different from the first manner, in the second driving state.

28. A vehicle, comprising:
an electric motor configured to output power to be transmitted to a wheel,
wherein the vehicle is switchable between a first traveling state in which the wheel is driven by the power of the electric motor with a first maximum speed as an upper limit, and a second traveling state in which the wheel is driven by the power of the electric motor with a second maximum speed, which is lower than the first maximum speed, as an upper limit,
the vehicle further comprises a notification unit configured to notify of a traveling state of the vehicle toward an outside of the vehicle, and
the notification unit performs a notification of a first manner in the first traveling state, and performs a notification of a second manner, which is different from the first manner ,in the second traveling state.

29. The vehicle according to any one of claims 14 to 23 and 28,
wherein the notification unit includes a light emitting unit provided to be visible from an outside of the vehicle.

30. The vehicle according to claim 29,
wherein the light emitting unit is provided to be changeable in at least one of an emission light color, an emission light intensity, a blinking interval, or a flickering interval.

31. A notification method for notifying of a traveling state of a vehicle toward an outside of the vehicle, the vehicle including an electric motor configured to output power to be transmitted to a wheel,
the notification method comprising:
a step of performing a notification of a first manner in a first traveling state in which the wheel is driven by the power of the electric motor with a first maximum speed as an upper limit; and
a step of performing, after switching from the first traveling state to a second traveling state in which the wheel is driven by the power of the electric motor with a second maximum speed, which is lower than the first maximum speed, as an upper limit, a notification of a second manner, which is different from the first manner, in the second traveling state.

32. A notification program for notifying of a traveling state of a vehicle toward an outside of the vehicle, the vehicle including an electric motor configured to output power to be transmitted to a wheel,
the notification program causing to perform:
a step of performing a notification of a first manner in a first traveling state in which the wheel is driven by the power of the electric motor with a first maximum speed as an upper limit; and
a step of performing, after switching from the first traveling state to a second traveling state in which the wheel is driven by the power of the electric motor with a second maximum speed, which is lower than the first maximum speed, as an upper limit, a notification of a second manner, which is different from the first manner, in the second traveling state.

33. A notification device, which is mounted on a vehicle and notifies toward an outside of the vehicle, the vehicle having an acquisition unit configured to acquire a type of a travel path,
(i) wherein the notification device performs:
a notification of a first manner in a case where the acquisition unit acquires that the vehicle is traveling on a pedestrian lane on which a pedestrian passes; and
a notification of a second manner, which is different from the first manner, in a case where the acquisition unit acquires that the vehicle is not traveling on the pedestrian lane or acquires that the vehicle is traveling on a travel path other than the pedestrian lane, or
(ii) the notification device performs:
a notification of a third manner in a case where the acquisition unit acquires that the vehicle is traveling on a vehicle lane on which a vehicle travels; and
a notification of a fourth manner, which is different from the third manner, in a case where the acquisition unit acquires that the vehicle is not traveling on the vehicle lane or acquires that the vehicle is traveling on a travel path other than the vehicle lane.

34. A notification method for a notification device which is mounted on a vehicle and notifies toward an outside of the vehicle, the vehicle having an acquisition unit configured to acquire a type of a travel path,
(i) the notification method comprising:
a step of performing a notification of a first manner in a case where the acquisition unit acquires that the vehicle is traveling on a pedestrian lane on which a pedestrian passes; and
a step of performing a notification of a second manner, which is different from the first manner, in a case where the acquisition unit acquires that the vehicle is not traveling on the pedestrian lane or acquires that the vehicle is traveling on a travel path other than the pedestrian lane, or
(ii) the notification method comprising:
a step of performing a notification of a third manner in a case where the acquisition unit acquires that the vehicle is traveling on a vehicle lane on which a vehicle travels; and
a step of performing a notification of a fourth manner, which is different from the third manner, in a case where the acquisition unit acquires that the vehicle is not traveling on the vehicle lane or acquires that the vehicle is traveling on a travel path other than the vehicle lane.

35. A notification program, for which a notification device is mounted on a vehicle and notifies toward an outside of the vehicle, the vehicle having an acquisition unit configured to acquire a type of a travel path,
(i) the notification program causing the notification device to perform:
a step of performing a notification of a first manner in a case where the acquisition unit acquires that the vehicle is traveling on a pedestrian lane on which a pedestrian passes; and
a step of performing a notification of a second manner, which is different from the first manner, in a case where the acquisition unit acquires that the vehicle is not traveling on the pedestrian lane or acquires that the vehicle is traveling on a travel path other than the pedestrian lane, or
(ii) the notification program causing the notification device to perform:
a step of performing a notification of a third manner in a case where the acquisition unit acquires that the vehicle is traveling on a vehicle lane on which a vehicle travels; and
a step of performing a notification of a fourth manner, which is different from the third manner, in a case where the acquisition unit acquires that the vehicle is not traveling on the vehicle lane or acquires that the vehicle is traveling on a travel path other than the vehicle lane.

36. A storage medium readable by a computer, the storage medium storing the notification program according to any one of claims 27, 32, and 35.
